# EUROPEAN PATENT APPLICATION

(11) **EP 4 661 535 A1**
(43) Date of publication of application: **10.12.2025**
(21) Application number: 23922364.7
(22) Date of filing: 31.10.2023
(51) Int. Cl.: H04W 72/04

(54) **COMMUNICATION METHOD AND APPARATUS**

(30) Priority: 17.02.2023 CN 202310153278
(71) Applicant: Huawei Technologies Co., Ltd., Shenzhen, Guangdong 518129 (CN)
(72) Inventor: LI, Jun, Shenzhen, Guangdong 518129 (CN); JIAO, Shurong, Shenzhen, Guangdong 518129 (CN); HUA, Meng, Shenzhen, Guangdong 518129 (CN)
(74) Representative: Goddar, Heinz J.
(86) International application number: PCT/CN2023/128909
(87) International publication number: WO 2024/169248

(57) **Abstract**

A communication method and apparatus are provided. The method includes: A terminal device receives first configuration information and second configuration information from a network device. The first configuration information is used to configure the terminal device to report first CSI of a first subband. The second configuration information is used to configure a first resource set. Any resource in the first resource set is a resource configured for the terminal device for channel measurement. An overlapping part between one or more resources in the first resource set and a first resource includes the first subband. The first resource includes a resource used for uplink transmission, and a resource corresponding to a guard band between the resource used for uplink transmission and a resource used for downlink transmission. Then, the terminal device may determine the first CSI, where a value of the first CSI corresponding to the one or more resources is a preset value. In this way, the network device can determine a bit quantity of the first CSI based on the first subband, so that the network device does not perform blind detection. This decreases complexity of detecting CSI by the network device.

## Description

### CROSS-REFERENCE TO RELATED APPLICATIONS

This application claims priority to Chinese Patent Application No. 202310153278.1, filed with the China National Intellectual Property Administration on February 17, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a mobile communication system, a terminal device may report channel state information (channel state information, CSI) to a network device. The terminal device may obtain the CSI by performing channel measurement by using a CSI-reference signal (CSI-reference signal, CSI-RS), and report the CSI to the network device.

In a flexible duplex technology, a resource configuration manner is flexible. For example, uplink transmission and downlink transmission may be simultaneously performed in one slot or symbol. After the flexible duplex technology is introduced, a CSI-RS resource may overlap an uplink resource in frequency domain. As a result, the terminal device cannot report the CSI.

However, a CSI-RS resource set used for channel measurement may include a plurality of CSI-RS resources, and overlapping statuses between the CSI-RS resources and the uplink resource may be different. Consequently, complexity of CSI detection by the network device is increased.

Therefore, how to decrease complexity of CSI detection is a technical problem to be resolved in this application.

### SUMMARY

This application provides a communication method and apparatus, to reduce complexity of CSI detection.

According to a first aspect, an embodiment of this application provides a communication method. The method may be applied to a terminal device or a chip in the terminal device. The following uses an example in which the method is applied to the terminal device for description. The method includes: The terminal device receives first configuration information and second configuration information from a network device. The first configuration information may be used to configure the terminal device to report first CSI of a first subband. The second configuration information may be used to configure a first resource set. Any resource in the first resource set is a resource configured for the terminal device for channel measurement. An overlapping part between one or more resources in the first resource set and a first resource includes the first subband. The first resource includes a resource used for uplink transmission and a resource corresponding to a guard band between the resource used for uplink transmission and a resource used for downlink transmission. Then, the terminal device may determine the first CSI, where a value of the first CSI corresponding to the one or more resources is a preset value.

According to the method, both the network device and the terminal device may determine the first CSI based on the first subband, to determine a bit quantity of the first CSI, so that the network device does not perform blind detection. This decreases complexity of CSI detection by the network device. For example, when the CSI is reported through the PUCCH, the network device may determine the bit quantity of the first CSI based on the first subband, and further determine a resource of the PUCCH, so that the network device does not perform blind detection. This decreases complexity of CSI detection by the network device. When the CSI is reported through the PUSCH, the network device may determine the bit quantity of the first CSI based on the first subband, so that the network device does not perform blind detection. This decreases complexity of CSI detection by the network device.

In a possible design, a value of first information in the first CSI corresponding to the one or more resources is the preset value. The first information includes at least one of the following: CQI of a first codeword on the first subband, CQI of a second codeword on the first subband, or a PMI on the first subband. In this design, both the network device and the terminal device may determine a quantity of bits of the first information in the first CSI based on the first subband, so that the network device does not perform blind detection. This decreases complexity of CSI detection by the network device.

In a possible design, the first CSI corresponding to the one or more resources does not include second information. In other words, the terminal device does not report the second information. The second information includes at least one of the following: the CQI of the second codeword on the first subband or the PMI on the first subband. In this design, a quantity of bits of the CSI reported by the terminal device can be decreased, to reduce overheads and save transmission resources.

In a possible design, the terminal device may further determine not to receive, on the first subband of the one or more resources, a CSI-RS used for channel measurement. In this design, energy consumption of the terminal device can be reduced, and standby time of the terminal device can be increased.

In a possible design, the first configuration information is further used to configure the terminal device to report second CSI of a second subband, and the overlapping part does not include the second subband. The terminal device may determine the second CSI. A value of the second CSI corresponding to the one or more resources is obtained through channel measurement. In this design, both the network device and the terminal device may determine a quantity of bits of to-be-reported CSI based on the first subband and the second subband, and the to-be-reported CSI includes the first CSI and the second CSI, so that the network device does not perform blind detection. This decreases complexity of CSI detection by the network device.

In a possible design, a priority of the first CSI is lower than a priority of the second CSI. In this design, the terminal device can preferentially ensure transmission of the CSI on the subband that does not overlap the first resource, so that the terminal device can send, to the network device as much as possible, the CSI obtained through measurement. In this way, the network device performs downlink scheduling based on the CSI obtained through measurement, to improve downlink transmission performance.

In a possible design, an overlapping part between a resource in a first time window in the one or more resources and the first resource includes the first subband. In this design, the terminal device may determine a relationship between the resource in the first time window and the first resource, to decrease calculation complexity.

According to a second aspect, an embodiment of this application provides a communication method. The method may be applied to a network device or a chip in the network device. The following uses an example in which the method is applied to the network device for description. The method includes: The network device sends first configuration information and second configuration information to a terminal device. The first configuration information is used to configure the terminal device to report CSI of a first subband. The second configuration information is used to configure a first resource set. Any resource in the first resource set is a resource configured for the terminal device for channel measurement. An overlapping part between one or more resources in the first resource set and a first resource includes the first subband. The first resource includes a resource used for uplink transmission and a resource corresponding to a guard band between the resource used for uplink transmission and a resource used for downlink transmission. A value of the first CSI corresponding to the one or more resources is a preset value.

According to the method, both the network device and the terminal device may determine the first CSI based on the first subband, to determine a bit quantity of the first CSI, so that the network device does not perform blind detection. This decreases complexity of CSI detection by the network device. For example, when the CSI is reported through the PUCCH, the network device may determine the bit quantity of the first CSI based on the first subband, and further determine a resource of the PUCCH, so that the network device does not perform blind detection. This decreases complexity of CSI detection by the network device. When the CSI is reported through the PUSCH, the network device may determine the bit quantity of the first CSI based on the first subband, so that the network device does not perform blind detection. This decreases complexity of CSI detection by the network device.

In a possible design, a value of first information in the first CSI corresponding to the one or more resources is the preset value. The first information includes at least one of the following: CQI of a first codeword on the first subband, CQI of a second codeword on the first subband, or a PMI on the first subband. In this design, both the network device and the terminal device may determine a quantity of bits of the first information in the first CSI based on the first subband, so that the network device does not perform blind detection. This decreases complexity of CSI detection by the network device.

In a possible design, the first CSI corresponding to the one or more resources does not include second information. The second information includes at least one of the following: the CQI of the second codeword on the first subband or the PMI on the first subband. In this design, a quantity of bits of the CSI reported by the terminal device can be decreased, to reduce overheads and save transmission resources.

In a possible design, the network device further determines not to send, on the first subband of the one or more resources, a CSI-RS used for channel measurement. In this design, the network device may not send the CSI-RS at the overlapping part between the one or more resources and the first resource. This can reduce energy consumption of the network device, reduce signaling overheads, avoid unnecessary resource occupation, and improve resource utilization.

In a possible design, the first configuration information is further used to configure the terminal device to report second CSI of a second subband, and the overlapping part does not include the second subband. A value of the second CSI corresponding to the one or more resources is obtained through channel measurement. In this design, both the network device and the terminal device may determine a quantity of bits of to-be-reported CSI based on the first subband and the second subband, and the to-be-reported CSI includes the first CSI and the second CSI, so that the network device does not perform blind detection. This decreases complexity of CSI detection by the network device.

In a possible design, a priority of the first CSI is lower than a priority of the second CSI. In this design, the terminal device can preferentially ensure transmission of the CSI on the subband that does not overlap the first resource, so that the terminal device can send, to the network device as much as possible, the CSI obtained through measurement. In this way, the network device performs downlink scheduling based on the CSI obtained through measurement, to improve downlink transmission performance.

In a possible design, an overlapping part between a resource in a first time window in the one or more resources and the first resource includes the first subband. In this design, the network device may determine a relationship between the resource in the first time window and the first resource, to decrease calculation complexity.

According to a third aspect, an embodiment of this application provides a communication method. The method may be applied to a terminal device or a chip in the terminal device. The following uses an example in which the method is applied to the terminal device for description. The method includes: The terminal device receives first configuration information and second configuration information from a network device. The first configuration information is used to configure the terminal device to report first CSI of a first subband and second CSI of a second subband. The second configuration information is used to configure a first resource set. Any resource in the first resource set is a resource configured for the terminal device for channel measurement. An overlapping part between one or more resources in the first resource set and a first resource includes the first subband, and the overlapping part does not include the second subband. The first resource includes a resource used for uplink transmission, and a resource corresponding to a guard band between the resource used for uplink transmission and a resource used for downlink transmission. Then, the terminal device may determine to send the second CSI to the network device, and not to send the first CSI to the network device.

According to the method, when the one or more resources in the first resource set overlap the first resource, the terminal device may send only CSI on a subband other than the overlapping part to the network device. This can reduce overheads and save transmission resources.

In addition, when the CSI is reported through a PUCCH, the network device may determine a resource of the PUCCH based on the subband other than the overlapping part, so that the network device does not perform blind detection. This decreases complexity of CSI detection by the network device. When the CSI is reported through a PUSCH, the network device may determine a bit quantity of the first CSI based on the subband other than the overlapping part. This decreases complexity of CSI detection by the network device.

In a possible design, an overlapping part between each resource in the first resource set and the first resource includes the first subband. In this design, overheads can be reduced, and it can be ensured that to-be-reported CSI includes CSI obtained through measurement.

In a possible design, an overlapping part between a resource in a first time window in the one or more resources and the first resource includes the first subband, and does not include the second subband. In this design, the terminal device may determine a relationship between the resource in the first time window and the first resource, to decrease calculation complexity.

According to a fourth aspect, an embodiment of this application provides a communication method. The method may be applied to a network device or a chip in the network device. The following uses an example in which the method is applied to the network device for description. The method includes: The network device sends first configuration information and second configuration information to a terminal device. The first configuration information is used to configure the terminal device to report first CSI of a first subband and second CSI of a second subband. The second configuration information is used to configure a first resource set. Any resource in the first resource set is a resource configured for the terminal device for channel measurement. An overlapping part between one or more resources in the first resource set and a first resource includes the first subband, and the overlapping part does not include the second subband. The first resource includes a resource used for uplink transmission, and a resource corresponding to a guard band between the resource used for uplink transmission and a resource used for downlink transmission. The network device may determine to receive the second CSI from the terminal device and not to receive the first CSI from the terminal device.

According to the method, when the one or more resources in the first resource set overlap the first resource, the network device may receive CSI on a subband other than the overlapping part from the terminal device. This can reduce overheads and save transmission resources.

In addition, when the CSI is reported through a PUCCH, the network device may determine a resource of the PUCCH based on the subband other than the overlapping part, so that the network device does not perform blind detection. This decreases complexity of CSI detection by the network device. When the CSI is reported through a PUSCH, the network device may determine a bit quantity of the first CSI based on the subband other than the overlapping part. This decreases complexity of CSI detection by the network device.

In a possible design, an overlapping part between each resource in the first resource set and the first resource includes the first subband. In this design, overheads can be reduced, and it can be ensured that to-be-reported CSI includes CSI obtained through measurement.

In a possible design, an overlapping part between a resource in a first time window in the one or more resources and the first resource includes the first subband, and does not include the second subband. In this design, the network device may determine a relationship between the resource in the first time window and the first resource, to decrease calculation complexity.

According to a fifth aspect, an embodiment of this application provides a communication method. The method may be applied to a terminal device or a chip in the terminal device. The following uses an example in which the method is applied to the terminal device for description. The method includes: The terminal device receives first configuration information and second configuration information from a network device. The first configuration information is used to configure the terminal device to report CSI of a first subband. The second configuration information indicates a first resource set. Any resource in the first resource set is a resource configured for the terminal device for channel measurement. Each resource in the first resource set does not overlap a first resource in frequency domain. The first resource includes a resource used for uplink transmission, and a resource corresponding to a guard band between the resource used for uplink transmission and a resource used for downlink transmission. Then, the terminal device may receive, based on the first resource set, a CSI-RS used for channel measurement, and send a part or all of the CSI to the network device.

According to the method, the network device may configure, for the terminal device, a resource that is used for channel measurement and that does not overlap the first resource. In this way, both the terminal device and the network device can determine a bit quantity of the CSI based on a non-overlapping subband, so that the network device does not perform blind detection. This decreases complexity of detecting CSI by the network device.

In a possible design, bandwidths and/or frequency domain locations of resources in the first resource set are the same.

In a possible design, each resource in the first resource set includes Q inconsecutive resources in frequency domain in one time unit, and a bandwidth and a frequency domain start location of an i^{th} resource in the Q inconsecutive resources in frequency domain are respectively a bandwidth and a location corresponding to i, where Q is a positive integer greater than or equal to 2, and i ranges from 1 to Q. In this design, the network device may configure, for the terminal device, inconsecutive resources in frequency domain used for channel measurement. This can increase spectrum utilization.

According to a sixth aspect, an embodiment of this application provides a communication method. The method may be applied to a network device or a chip in the network device. The following uses an example in which the method is applied to the network device for description. The method includes: The network device sends first configuration information and second configuration information to a terminal device. The first configuration information is used to configure the terminal device to report CSI of a first subband. The second configuration information indicates a first resource set. Any resource in the first resource set is a resource configured for the terminal device for channel measurement. Each resource in the first resource set does not overlap a first resource in frequency domain. The first resource includes a resource used for uplink transmission, and a resource corresponding to a guard band between the resource used for uplink transmission and a resource used for downlink transmission. Then, the network device may receive a part or all of the CSI from the terminal device.

According to the method, the network device may configure, for the terminal device, a resource that is used for channel measurement and that does not overlap the first resource. In this way, both the terminal device and the network device can determine a bit quantity of the CSI based on a non-overlapping subband, so that the network device does not perform blind detection. This decreases complexity of detecting CSI by the network device.

In a possible design, bandwidths and/or frequency domain locations of resources in the first resource set are the same.

In a possible design, each resource in the first resource set includes Q inconsecutive resources in frequency domain in one time unit, and a bandwidth and a frequency domain start location of an i^{th} resource in the Q inconsecutive resources in frequency domain are respectively a bandwidth and a location corresponding to i, where Q is a positive integer greater than or equal to 2, and i ranges from 1 to Q. In this design, the network device may configure, for the terminal device, inconsecutive resources in frequency domain used for channel measurement. This can increase spectrum utilization.

According to a seventh aspect, an embodiment of this application provides a communication method. The method may be applied to a terminal device or a chip in the terminal device. The following uses an example in which the method is applied to the terminal device for description. The method includes: The terminal device receives first configuration information and second configuration information from a network device. The first configuration information is used to configure the terminal device to report CSI of a first subband. The second configuration information indicates a first resource set. Any resource in the first resource set is a resource configured for the terminal device for channel measurement. An overlapping part between a second resource in the first resource set and a first resource includes the first subband. The first resource includes a resource used for uplink transmission and a resource corresponding to a guard band between the resource used for uplink transmission and a resource used for downlink transmission. The terminal device may determine not to receive, at the overlapping part, a CSI-RS used for channel measurement.

According to the method, the terminal device does not receive the CSI-RS at the overlapping part. This can reduce energy consumption of the terminal device, and increase standby time of the terminal device.

In a possible design, the terminal device may determine not to receive the CSI-RS on the second resource at a first time domain location. The first time domain location is a time domain location at which the overlapping part is located, and the second resource is a periodic resource or an aperiodic resource. In this design, the terminal device does not receive the CSI-RS on the second resource at the first time domain location, and may receive the CSI-RS on the second resource at a time domain location other than the first time domain location. This can improve resource utilization.

In a possible design, the second resource is a periodic resource, and the terminal device may determine not to receive the CSI-RS by using the second resource. In this design, energy consumption of the terminal device can be reduced, and standby time of the terminal device can be increased.

According to an eighth aspect, an embodiment of this application provides a communication method. The method may be applied to a network device or a chip in the network device. The following uses an example in which the method is applied to the network device for description. The method includes: The network device sends first configuration information and second configuration information to a terminal device. The first configuration information is used to configure the terminal device to report CSI of a first subband. The second configuration information indicates a first resource set. Any resource in the first resource set is a resource configured for the terminal device for channel measurement. An overlapping part between a second resource in the first resource set and a first resource includes the first subband. The first resource includes a resource used for uplink transmission and a resource corresponding to a guard band between the resource used for uplink transmission and a resource used for downlink transmission. The network device may determine not to send, at the overlapping part, the CSI-RS used for channel measurement.

According to the method, the network device does not send the CSI-RS at the overlapping part, so that energy consumption of the network device can be reduced, signaling overheads can be reduced, and transmission resources can be saved.

In a possible design, the network device determines not to send the CSI-RS on the second resource at a first time domain location. The first time domain location is a time domain location at which the overlapping part is located, and the second resource is a periodic resource or an aperiodic resource. In this design, the network device does not send the CSI-RS on the second resource at the first time domain location, and may send the CSI-RS on the second resource at a time domain location other than the first time domain location. This can improve resource utilization.

In a possible design, the second resource is a periodic resource, and the network device may determine not to send the CSI-RS by using the second resource. In this design, energy consumption of the network device can be reduced, signaling overheads can be reduced, and transmission resources can be saved.

According to a ninth aspect, an embodiment of this application provides a communication apparatus, including units configured to perform steps according to any one of the foregoing aspects.

According to a tenth aspect, an embodiment of this application provides a communication apparatus, including at least one processing element and at least one storage element. The at least one storage element is configured to store a program and data, and the at least one processing element is configured to read and execute the program and the data stored in the storage element, so that the method according to any one of the foregoing aspects of this application is implemented.

According to an eleventh aspect, an embodiment of this application provides a communication system, including a terminal device configured to perform the method according to the first aspect and a network device configured to perform the method according to the second aspect.

According to a twelfth aspect, an embodiment of this application provides a communication system, including a terminal device configured to perform the method according to the third aspect, and a network device configured to perform the method according to the fourth aspect.

According to a thirteenth aspect, an embodiment of this application provides a communication system, including a terminal device configured to perform the method according to the fifth aspect and a network device configured to perform the method according to the sixth aspect.

According to a fourteenth aspect, an embodiment of this application provides a communication system, including a terminal device configured to perform the method according to the seventh aspect and a network device configured to perform the method according to the eighth aspect.

According to a fifteenth aspect, an embodiment of this application further provides a computer program. When the computer program is run on a computer, the computer is enabled to perform the method according to any one of the foregoing aspects.

According to a sixteenth aspect, an embodiment of this application further provides a computer-readable storage medium. The computer-readable storage medium stores a computer program. When the computer program is executed by a computer, the computer is enabled to perform the method according to any one of the foregoing aspects.

According to a seventeenth aspect, an embodiment of this application further provides a chip. The chip is configured to read a computer program stored in a memory, to perform the method according to any one of the foregoing aspects.

According to an eighteenth aspect, an embodiment of this application further provides a chip system. The chip system includes a processor, configured to support a computer apparatus in implementing the method according to any one of the foregoing aspects. In a possible design, the chip system further includes a memory, and the memory is configured to store a program and data that are necessary for the computer apparatus. The chip system may include a chip, or may include a chip and another discrete component.

For technical effect that can be achieved according to any one of the ninth aspect to the eighteenth aspect, refer to the technical effect that can be achieved in any possible design according to any one of the first aspect to the eighth aspect. No repeated description is provided.

### BRIEF DESCRIPTION OF DRAWINGS

FIG. 1 is a diagram of an architecture of a communication system according to an embodiment of this application;
FIG. 2 is a diagram of a first type of CSI-RS resource set according to an embodiment of this application;
FIG. 3 is a diagram of a duplex mode according to an embodiment of this application;
FIG. 4A is a diagram of a second type of CSI-RS resource set according to an embodiment of this application;
FIG. 4B is a diagram of a third type of CSI-RS resource set according to an embodiment of this application;
FIG. 5 is a diagram of a fourth type of CSI-RS resource set according to an embodiment of this application;
FIG. 6 is a flowchart of a communication method according to an embodiment of this application;
FIG. 7 is a flowchart of another communication method according to an embodiment of this application;
FIG. 8 is a diagram of a fifth type of CSI-RS resource set according to an embodiment of this application;
FIG. 9 is a flowchart of still another communication method according to an embodiment of this application;
FIG. 10A is a diagram of a sixth type of CSI-RS resource set according to an embodiment of this application;
FIG. 10B is a diagram of a seventh type of CSI-RS resource set according to an embodiment of this application;
FIG. 11 is a flowchart of yet another communication method according to an embodiment of this application;
FIG. 12 is a diagram of a structure of a communication apparatus according to an embodiment of this application; and
FIG. 13 is a diagram of a structure of another communication apparatus according to an embodiment of this application.

### DESCRIPTION OF EMBODIMENTS

The technical solutions in embodiments of this application may be applied to various communication systems, for example, a 5th generation (5th generation, 5G) mobile communication system and another communication system, for example, a 6th generation (6th generation, 6G) mobile communication system, or may be applied to a satellite communication system, a device-to-device (device-to-device, D2D) network, a machine to machine (machine to machine, M2M) network, an internet of things (internet of things, IoT) network, or another network.

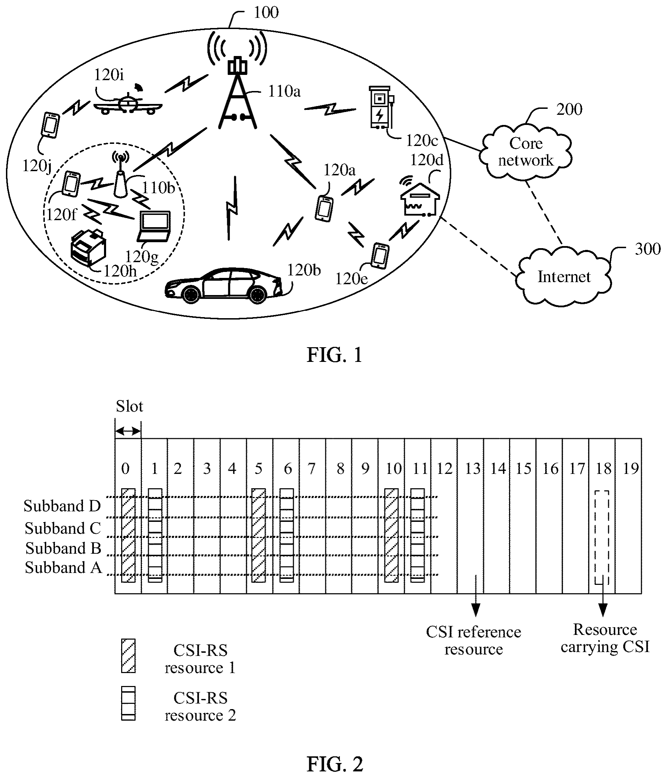

An architecture of the communication system to which embodiments of this application are applied may be shown in FIG. 1. The communication system includes a radio access network 100 and a core network 200. Optionally, the communication system may further include an internet 300. The radio access network 100 may include at least one network device, for example, 110a and 110b in FIG. 1, and may further include at least one terminal device, for example, 120a to 120j in FIG. 1. The terminal device is connected to the network device in a wireless manner, and the network device is connected to the core network in a wireless manner or a wired manner. The core network device and the network device may be different physical devices independent of each other, or functions of the core network device and logical functions of the network device may be integrated into a same physical device, or some of functions of the core network device and some of functions of the network device may be integrated into one physical device. Terminal devices may be connected to each other in a wired manner or a wireless manner, and network devices may be connected to each other in a wired manner or a wireless manner. FIG. 1 is merely a diagram. The communication system may further include another device, for example, may further include a wireless relay device and a wireless backhaul device. This is not shown in FIG. 1.

The network device may also be referred to as a radio access network device, and may be a base station (base station), an evolved NodeB (evolved NodeB, eNodeB), a transmission reception point (transmission reception point, TRP), a next generation NodeB (next generation NodeB, gNB) in a 5G mobile communication system, a next generation NodeB in a 6G mobile communication system, a base station in a future mobile communication system, an access node in a wireless fidelity (wireless fidelity, Wi-Fi) system, or the like, or may be a module or a unit that completes some functions of a base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a part or all of functions of a physical layer. For specific descriptions of the foregoing protocol layers, refer to technical specifications related to the 3rd generation partnership project (3rd generation partnership project, 3GPP). The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application.

The terminal device is a device that has a wireless transceiver function, and may send a signal to the network device, or receive a signal from the network device. The terminal device may also be referred to as a terminal, user equipment (user equipment, UE), a mobile station (mobile station, MS), a mobile terminal, or the like. The terminal device may be widely used in various scenarios, for example, D2D, vehicle to everything (vehicle to everything, V2X) communication, machine-type communication (machine-type communication, MTC), IoT, virtual reality, augmented reality, industrial control, self-driving, telemedicine, a smart grid, smart furniture, a smart office, smart wearable, smart transportation, and a smart city. The terminal device may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal device are not limited in embodiments of this application.

The network device and the terminal device may be at fixed locations or may be movable. The network device and the terminal device may be deployed on the land, including an indoor device, an outdoor device, a handheld device, or a vehicle-mounted device, may be deployed on the water surface, or may be deployed on a plane, a balloon, and a satellite in the air. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile network device. For the terminal device 120j that accesses the radio access network 100 through 120i, the terminal device 120i is a network device. However, for the network device 110a, 120i is a terminal device. In other words, 110a and 120i communicate with each other by using a radio air interface protocol. Certainly, 110a and 120i may alternatively communicate with each other by using an interface protocol between network devices. In this case, for 110a, 120i is also a network device. Therefore, the network device and the terminal device may be collectively referred to as a communication apparatus. 110a and 110b in FIG. 1 may be referred to as a communication apparatus with a function of a network device, and 120a to 120j in FIG. 1 may be referred to as a communication apparatus with a function of a terminal device.

Communication between a network device and a terminal device, between network devices, or between terminal devices may be performed by using a licensed spectrum, an unlicensed spectrum, or both a licensed spectrum and an unlicensed spectrum, or may be performed by using a spectrum below 6 gigahertz (gigahertz, GHz), a spectrum above 6 GHz, or both a spectrum below 6 GHz and a spectrum above 6 GHz. A spectrum resource for wireless communication is not limited in embodiments of this application.

In embodiments of this application, a function of a network device may be performed by the network device, or may be performed by a module (for example, a chip) in the network device, or may be performed by a control subsystem including the function of the network device. The control subsystem including the function of the network device may be a control center in the foregoing application scenarios such as the smart grid, the industrial control, the smart transportation, and the smart city. A function of a terminal device may be performed by the terminal device, or may be performed by a module (for example, a chip or a modem) in the terminal device, or may be performed by an apparatus including the function of the terminal device. An example in which the function of the network device is performed by the network device and the function of the terminal device is performed by the terminal device is used below for description.

For ease of understanding by a person skilled in the art, the following explains and describes some terms in embodiments of this application.

1. CSI: The CSI is information representing a channel state. The CSI may include: a CSI-RS resource indicator (CSI-RS resource indicator, CRI), channel quality information (channel quality indicator, CQI), a precoding matrix indicator (precoding matrix indicator, PMI), a rank indicator (rank indicator, RI), a layer indicator (layer indicator, LI), reference signal received power (reference signal received power, RSRP), a signal to interference plus noise ratio (signal to interference plus noise ratio, SINR), and the like. The following describes some information in the CSI.
(1) CRI: The CRI indicates a CSI-RS resource based on which the CSI reported by the terminal device is obtained. For example, a CSI-RS resource set (resource set) used for channel measurement includes four CSI-RS resources. If a value of the CRI is 00, it indicates that the reported CSI is obtained based on a 1st CSI-RS resource in the CSI-RS resource set. If a value of the CRI is 01, it indicates that the reported CSI is obtained based on a 2nd CSI-RS resource in the CSI-RS resource set.
(2) RI: The RI indicates a rank obtained by the terminal device through channel measurement.
(3) PMI: The PMI indicates a precoding matrix. The PMI may include a wideband PMI (wideband PMI) and/or a subband PMI (subband PMI). When the network device configures the terminal device to report the PMI, the network device may further configure whether the reported PMI is a wideband PMI or a subband PMI.

Both the wideband PMI and the subband PMI are related to a subband. For ease of understanding, the following first describes a subband.

The subband is divided based on common resource blocks (common resource blocks, CRBs), and each CRB may include one physical resource block (physical resource block, PRB). A size of the subband may be determined based on a size of a bandwidth part (bandwidth part, BWP) and a configuration of the network device. For example, Table 1 shows a possible correspondence between the size of the subband and the size of the BWP. The subband herein is a subband of the CSI.

**Table 1**

| Size of the BWP (unit: PRB) | Size of the subband (unit: PRB) |
|---|---|
| 24 to 72 | 4 and 8 |
| 73 to 144 | 8 and 16 |
| 145 to 275 | 16 and 32 |

Assuming that the size of the BWP is 76 PRBs, that is, one BWP includes 76 PRBs, and the size of the subband configured by the network device is a first value in Table 1, the size of the subband is eight PRBs. For example, a CRB 0 to a CRB 7 may be one subband, a CRB 8 to a CRB 15 may be another subband, and so on.

A boundary of the BWP may not be aligned with a boundary of the subband. Therefore, an actual size of the subband at the boundary of the BWP decreases. For example, in one BWP, CRBs corresponding to a CSI-RS resource are a CRB 2 to a CRB 77, and the BWP includes 10 subbands in total, namely, a subband A to a subband J. The subband A includes the CRB 2 to the CRB 7, and the subband J includes the subband CRB 72 to the subband CRB 77.

A wideband in the wideband PMI includes all subbands that are configured by the network device and on which the CSI needs to be reported, and the wideband PMI means that the terminal device reports one PMI for the wideband. For example, the subbands that are configured by the network device and on which the CSI needs to be reported include the subband B, the subband C, the subband D, the subband E, the subband G, and the subband H. In this case, the terminal device may perform channel measurement on these subbands to obtain one PMI (namely, a wideband PMI), and report the PMI to the network device. Alternatively, a bandwidth in the wideband PMI may further include a bandwidth of the CSI-RS resource.

The network device may configure, by using a bitmap, CSI on a subband to be reported by the terminal device. For example, if there are 10 subbands in the BWP, the bitmap may include 10 bits, and each bit corresponds to one subband. When a value of any bit in the bitmap is 1, it indicates that the terminal device needs to report CSI on a subband corresponding to the bit.

The subband PMI means that the terminal device reports one PMI for each subband that is configured by the network device and that is in subbands on which the CSI needs to be reported. For example, the subbands that are configured by the network device and on which the CSI needs to be reported include the subband B, the subband C, the subband D, the subband E, the subband G, and the subband H. In this case, the terminal device obtains a PMI 1 through channel measurement on the subband B, and the terminal device obtains a PMI 2 through channel measurement on the subband C. By analogy, the terminal device obtains one subband PMI through channel measurement on each subband in these subbands, and reports a plurality of subband PMIs obtained through measurement to the network device.

The PMI sent by the terminal device to the network device may include a parameter i1, or a parameter i1 and a parameter i2. The parameter i1 is wideband-related information, and the parameter i2 may be wideband-related information, or may be subband-related information. A quantity of bits of the PMI may be related to a rank, and different ranks correspond to different quantities of bits of PMIs.

(4) CQI: The CQI is information indicating channel quality. The CQI may include wideband CQI and/or subband CQI.

A wideband in the wideband CQI includes all subbands that are configured by the network device and on which the CSI needs to be reported, and the wideband CQI means that the terminal device reports one piece of CQI for the wideband. For example, the subbands that are configured by the network device by using the bitmap and on which the CSI needs to be reported include the subband B, the subband C, the subband D, the subband E, the subband G, and the subband H. In this case, the terminal device may perform channel measurement on these subbands to obtain one piece of CQI (namely, wideband CQI), and report the CQI to the network device. A size of the wideband CQI is 4 bits. The wideband in the wideband CQI may also include a bandwidth of the CSI-RS resource.

The subband CQI means that the terminal device reports one CQI for each subband that is configured by the network device and that is in subbands on which the CSI needs to be reported. A size of each subband CQI may be 4 bits, or may be 2 bits. When the size of the subband CQI is 2 bits, the subband CQI may be differential CQI. The differential CQI may also be referred to as subband differential CQI, and indicates a difference between CQI of a corresponding subband and the wideband CQI.

The CQI further includes CQI of a first codeword and/or CQI of a second codeword. In some examples, the terminal device may report only the CQI of the first codeword, where the CQI may be wideband CQI or subband CQI. In some other examples, the terminal device may report CQI of a plurality of codewords. For example, when a rank is greater than 4, the terminal device may report the CQI of the first codeword and the CQI of the second codeword, where the CQI may be wideband CQI or subband CQI. For another example, the terminal device may report CQI of each codeword, where the CQI may be wideband CQI or subband CQI.

In the CSI, some CSI belongs to a first part of the CSI, and some CSI belongs to a second part of the CSI. The first part of the CSI may also be referred to as a CSI part 1 (CSI part 1), and the second part of the CSI may also be referred to as a CSI part 2 (CSI part 2). A quantity of bits of the first part of the CSI is fixed, and may be used to determine a quantity of bits of the second part of the CSI. For example, the first part of the CSI includes at least one of the following: the RI, the CRI, and the CQI of the first codeword. The quantity of bits of the second part of the CSI is not fixed. For example, the second part of the CSI includes at least one of the following: the LI, the PMI, and the CQI of the second codeword. After receiving the CSI, the network device first parses the first part of the CSI, and then parses the second part of the CSI.

### 2. CSI measurement

In a mobile communication system, the terminal device may perform channel measurement on a CSI-RS resource by using a CSI-RS, to obtain CSI. The CSI-RS resource may be periodic (periodic), semi-persistent (semi-persistent), or aperiodic (aperiodic). A periodic/semi-persistent/aperiodic CSI-RS resource may be configured by the network device for the terminal device by using higher layer signaling (for example, radio resource control (radio resource control, RRC) signaling) and/or downlink control information (downlink control information, DCI).
(1) For the periodic CSI-RS resource, the terminal device performs channel measurement on the periodic CSI-RS resource at a fixed interval by using the CSI-RS signal. The periodic CSI-RS resource may be a resource in a first CSI-RS resource set. In the first CSI-RS resource set, periodicities of all resources are the same, offsets of different resources may be different, and start resource blocks (resource blocks, RBs) and bandwidths of all the resources are the same. For example, as shown in FIG. 2, the first CSI-RS resource set includes two CSI-RS resources (namely, a CSI-RS resource 1 and a CSI-RS resource 2), periodicities of the two CSI-RS resources are both five slots, an offset of the CSI-RS resource 1 is 0, and an offset of the CSI-RS resource 2 is 1. In frequency domain, start RBs and bandwidths of the two CSI-RS resources are the same. It should be understood that the CSI-RS resource is a non-zero-power (Non-zero-power, NZP) CSI-RS resource.
(2) The network device may activate and deactivate the semi-persistent CSI-RS resource by using higher layer signaling (for example, media access control control element (media access control control element, MAC CE) signaling). After activation, the terminal device performs channel measurement on the periodic CSI-RS resource at the fixed interval by using the CSI-RS signal. The semi-persistent CSI-RS resource may be a resource in the first CSI-RS resource set. For specific content of the first CSI-RS resource set, refer to the foregoing descriptions of the first CSI-RS resource set.
(3) The aperiodic CSI-RS resource may be a resource in a second CSI-RS resource set. The second CSI-RS resource set includes a plurality of CSI-RS resources, and each second CSI-RS resource set corresponds to one slot offset (slot offset), which is used to determine a slot in which a CSI-RS resource in the set is located. The network device may associate the second CSI-RS resource set with one aperiodic CSI report by using the higher layer signaling (such as RRC or RRC+MAC CE signaling). The network device triggers the aperiodic CSI report by using the DCI. When the aperiodic CSI report is activated, the second CSI-RS resource set associated with the aperiodic CSI report is also activated. The slot corresponding to the second CSI-RS resource set is a slot in which the activated DCI is located plus a slot offset. For example, when the slot offset is 0, the second CSI-RS resource set and the DCI are in a same slot. CSI-RS resources in a same second CSI-RS resource set have a same slot offset, and specific symbols on which these CSI-RS resources are located are configured in configuration information of the CSI-RS resources.

In addition, a CSI-RS resource for CSI measurement needs to be located before a CSI reference resource. For example, as shown in FIG. 2, the CSI reference resource is located in a slot 13. The CSI-RS resource for CSI measurement may be located before the slot 13.

In some examples, the terminal device may select CSI-RS resources in one or more of a slot 0, a slot 1, a slot 5, a slot 6, a slot 10, and a slot 11 to perform channel measurement, to obtain the CSI.

In some other examples, if the network device configures a time domain restriction for the terminal device, that is, the network device sends, to the terminal device, configuration information including a time restriction for channel measurement (timeRestrictionForChannelMeasurements), the terminal device can select only a CSI-RS resource closest to the CSI reference resource to perform channel measurement, to obtain the CSI. For example, when the terminal device performs channel measurement by using the CSI-RS resource 1 shown in FIG. 2, and then reports CSI corresponding to the CSI-RS resource 1, the terminal device can select only a CSI-RS in the slot 10 to perform channel measurement. For another example, when the terminal device performs channel measurement by using the CSI-RS resource 2 shown in FIG. 2, and then reports CSI corresponding to the CSI-RS resource 2, the terminal device can select only a CSI-RS in the slot 11 to perform channel measurement.

3. CSI report (report) The CSI report may be periodic, semi-persistent, or aperiodic. One CSI report is associated with one CSI-RS resource set.

For a periodic CSI report, the network device may configure, by using higher layer signaling (for example, RRC signaling), the terminal device to perform the periodic CSI report. The terminal device performs channel measurement based on the periodic CSI-RS resource, and reports the CSI on a physical uplink control channel (physical uplink control channel, PUCCH) at a fixed time interval.

For a semi-persistent CSI report, when the terminal device is configured to perform the semi-persistent CSI report, the terminal device starts to perform the CSI report only after receiving, from the network device, signaling used for activation, and ends the CSI report after receiving signaling used for deactivation. In some manners, when the CSI is carried on a PUCCH, the network device may activate and deactivate the semi-persistent CSI report by using downlink higher layer signaling (such as MAC CE signaling). In other manners, when the CSI is carried on a physical uplink shared channel (physical uplink shared channel, PUSCH), the network device may activate and deactivate the semi-persistent CSI report by using the DCI.

For the aperiodic CSI report, the network device may semi-statically configure configuration parameters of a plurality of CSI reports for the terminal device by using the RRC signaling, and trigger one or more CSI reports by using the DCI. The terminal device may perform channel measurement based on the configuration parameter of the CSI report, and report the CSI on the PUSCH.

4. Priority of the CSI: The priority of the CSI may be used to determine CSI to be transmitted. When a resource that is on the PUCCH or the PUSCH and that is used to carry the CSI is insufficient, CSI to be transmitted and CSI to be discarded may be determined in a descending order of priorities. For example, a priority of CSI in the CSI part 2 is lower than a priority of CSI in the CSI part 1. When the CSI is reported through the PUCCH, if a capacity of the PUCCH is insufficient, the terminal device may first consider discarding the CSI in the CSI part 2 based on the priorities of the CSI, and then consider discarding the CSI in the CSI part 1. A smaller identifier of a CSI report indicates a higher priority of the CSI report. The terminal device may consider first discarding CSI corresponding to a CSI report with a large identifier (namely, a low priority), and then consider discarding CSI corresponding to a CSI report with a small identifier (namely, a high priority).

### 5. Duplex mode

Currently, duplex modes in new radio (new radio, NR) include frequency division duplex (frequency division duplex, FDD) and time division duplex (time division duplex, TDD).

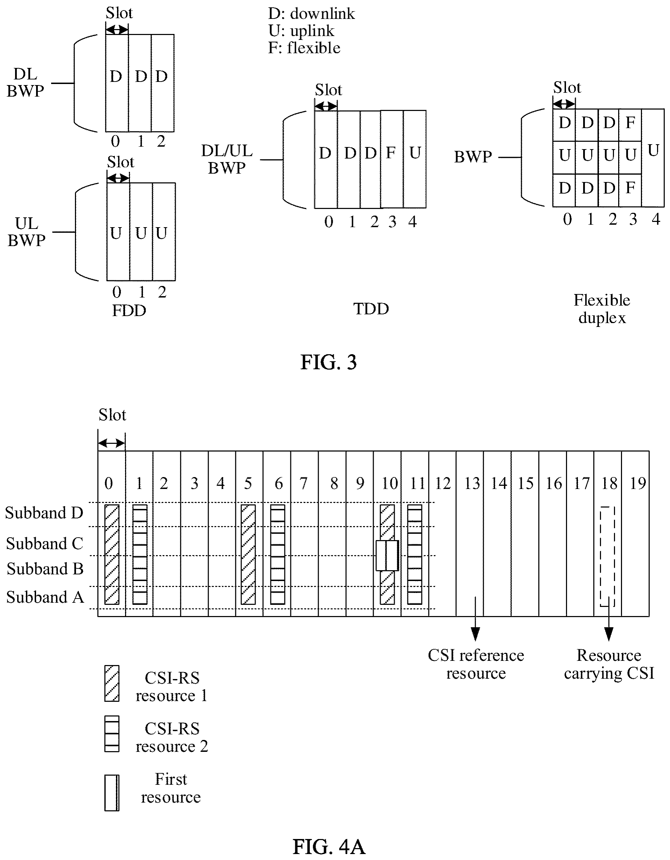

FIG. 3 shows an example of FDD in a left figure. As shown in the left figure of FIG. 3, a downlink (downlink, DL) BWP in the slot 0 may be used for downlink transmission, and an uplink (uplink, UL) BWP in the slot 0 may be used for uplink transmission.

FIG. 3 shows an example of TDD in a middle figure. As shown in the middle figure of FIG. 3, the slot 0 can be used for only downlink transmission, the slot 4 can be used for only uplink transmission, the slot 3 is a flexible slot, and the slot 3 can be used for uplink transmission or downlink transmission, but cannot be used for uplink transmission and downlink transmission simultaneously.

Compared with FDD, TDD occupies fewer frequency-domain resources. However, in TDD, uplink transmission and downlink transmission cannot be performed simultaneously in all slots. As a result, an uplink transmission delay is increased. To resolve a TDD delay problem, flexible duplex is being discussed in a standard. Flexible duplex may also be referred to as complementary TDD (Complementary TDD, C-TDD), full duplex (full duplex), subband full duplex (subband full duplex, SBFD), or the like. A core idea of flexible duplex is that uplink transmission and downlink transmission can be performed simultaneously in a time unit (for example, a symbol or a slot).

FIG. 3 shows an example of flexible duplex in a right figure. As shown in the right figure in FIG. 3, in one slot (for example, the slot 0), there is a segment of frequency domain resource in the BWP, and uplink transmission can be performed on the frequency domain resource. In this way, uplink transmission can be performed in the slot 0. This can decrease an uplink transmission delay. In addition, downlink transmission can also be performed in the slot 0.

In flexible duplex, the network device may be a full duplex device. For example, the network device may perform uplink transmission and downlink transmission simultaneously in the slot 0. In some examples, the terminal device may be a full duplex device. For example, the terminal device may perform uplink transmission and downlink transmission simultaneously in the slot 0. In some other examples, the terminal device may be a half duplex device. For example, the terminal device performs only uplink transmission or only downlink transmission in the slot 0. Full duplex may be understood as that uplink transmission and downlink transmission are performed simultaneously, and half duplex may be understood as that only uplink transmission or downlink transmission can be performed at a moment (for example, in a symbol or a slot).

Compared with TDD, flexible duplex has more uplink resources. This increases uplink coverage and decreases an uplink transmission delay.

6. Time unit: The time unit indicates a unit of time. For example, the time unit may be but is not limited to a radio frame, a subframe (subframe), a slot (slot), a symbol, or the like. The symbol may be a time domain symbol (for example, an orthogonal frequency division multiplexing (orthogonal frequency division multiplexing, OFDM) symbol) or the like.

7. In subbands that are configured by the network device and that are used for CSI reports, an identifier of an odd-numbered subband is an odd number, for example, 1 or 3. An identifier of an even-numbered subband is an even number, for example, 0 or 2.

Assuming that the network device configures the terminal device to report CSI on the subband A, the subband B, the subband C, and the subband D, identifiers of the subband A, the subband B, the subband C, and the subband D are respectively 0, 1, 2, and 3. Even-numbered subbands include the subband A with the identifier of 0 and the subband C with the identifier of 2, and odd-numbered subbands include the subband B with the identifier of 1 and the subband D with the identifier of 3.

In embodiments of this application, unless otherwise specified, a quantity of nouns indicates "a singular noun or a plural noun", that is, "one or more". "At least one" means one or more, and "a plurality of" means two or more. A term "and/or" describes an association relationship of associated objects, and indicates that three relationships may exist. For example, A and/or B may indicate the following three cases: Only A exists, both A and B exist, and only B exists. "At least one of the following items (pieces)" or a similar expression thereof is any combination of these items (pieces), including a single item (piece) or any combination of a plurality of items (pieces).

In addition, it should be understood that in the descriptions of this application, words such as "first" and "second" are merely used for distinguishing, and should not be understood as an indication or implication of relative importance or an indication or implication of a sequence.

After flexible duplex is introduced, some resources in the first CSI-RS resource set or the second CSI-RS resource set may overlap a first resource. The first resource includes a resource used for uplink transmission, and a resource corresponding to a guard band between the resource used for uplink transmission and a resource used for downlink transmission. The resource used for uplink transmission is, for example, a subband used for uplink transmission, namely, an uplink subband, and the resource used for downlink transmission is, for example, a subband used for downlink transmission, namely, a downlink subband. For example, as shown in FIG. 4A, the first CSI-RS resource set includes the CSI-RS resource 1 and the CSI-RS resource 2, the CSI-RS resource 1 overlaps the first resource on the subband B and the subband C in the slot 10, and the CSI-RS resource 2 does not overlap the first resource. For another example, when a time unit in FIG. 4A is replaced from a slot to a symbol, the first CSI-RS resource set may be changed to the second CSI-RS resource set, the CSI-RS resource 1 in the second CSI-RS resource set overlaps the first resource on the subband B and the subband C in the symbol 10, and the CSI-RS resource 2 does not overlap with the first resource.

Currently, when a resource used for channel measurement overlaps the first resource, the terminal device reports only CSI of a non-overlapping subband. For example, as shown in FIG. 4A, when the terminal device performs channel measurement by using the CSI-RS resource 1 in the slot 10, to obtain the CSI, the terminal device reports only CSI on the subband A and the subband D, and does not report CSI on the subband B and the subband C. When the terminal device performs channel measurement by using the CSI-RS resource 2, to obtain the CSI, the terminal device reports the CSI on the subband A, the subband B, the subband C, and the subband D. In this way, when the terminal device uses different resources in a CSI-RS resource set to perform channel measurement and report CSI, quantities of involved subbands may be different, and quantities of bits of reported CSI may also be different due to different quantities of subbands. This increases complexity of CSI detection by the network device.

For example, when the CSI is reported through the PUCCH, the PUCCH is related to a quantity of bits of the CSI, and PUCCHs determined based on different quantities of bits of the CSI may be different. When the terminal device performs channel measurement by using different resources in the first CSI-RS resource set or the second CSI-RS resource set, quantities of bits of the CSI may be different. Therefore, the network device cannot determine a PUCCH resource used to carry the CSI, and needs to obtain the CSI through blind detection. This increases complexity of CSI detection by the network device.

For another example, when the CSI is reported on the PUSCH, and when the terminal device performs channel measurement by using different resources in the first CSI-RS resource set or the second CSI-RS resource set, quantities of bits of the CSI on the PUSCH may be different. Therefore, the network device needs to perform blind detection on the PUSCH to obtain the CSI. This increases complexity of CSI detection by the network device.

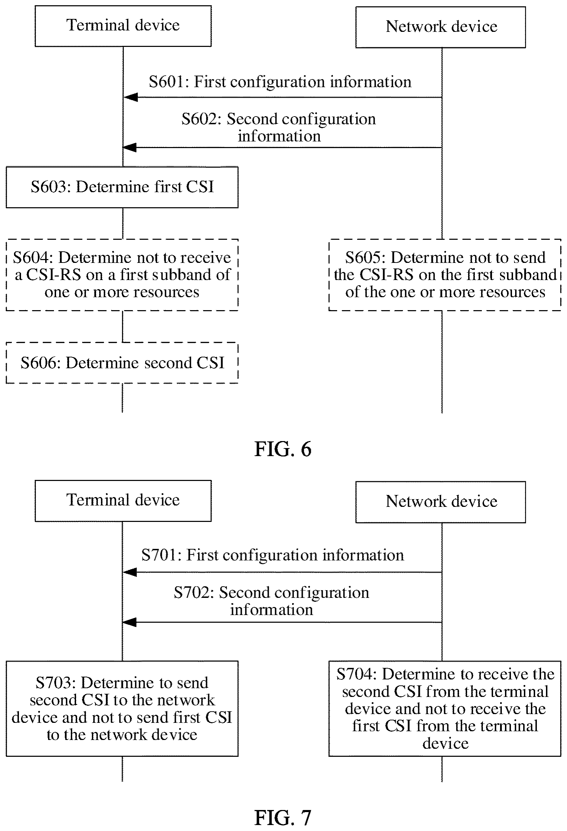

To reduce complexity of CSI detection by the network device, an embodiment of this application provides a communication method. The method may be applied to the communication system shown in FIG. 1. The following specifically describes a procedure of the method with reference to a flowchart shown in FIG. 6.

S601: A network device sends first configuration information to a terminal device, and correspondingly, the terminal device receives the first configuration information from the network device.

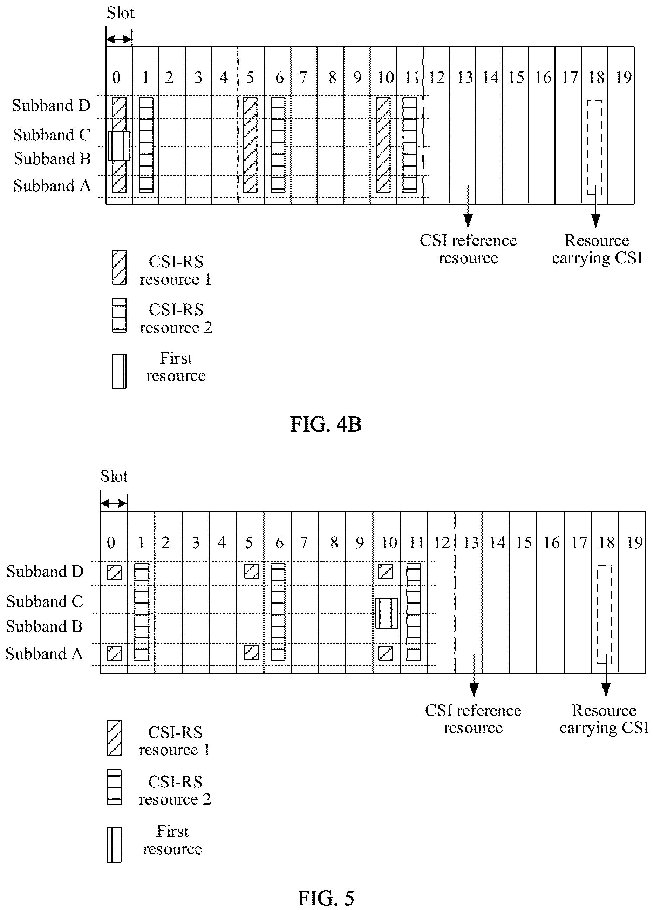

The first configuration information may be used to configure the terminal device to report first CSI of a first subband. The first subband is, for example, the subband B or the subband C in FIG. 4A or FIG. 5.

Optionally, S601 may be implemented in one of the following implementations.

Implementation 1: The network device configures, by using the first configuration information, the terminal device to periodically report the first CSI of the first subband.

The first configuration information may include CSI configuration information. The CSI configuration information may include but is not limited to at least one of the following:
1. information indicating a size of the first subband: for example, the size of the first subband is eight PRBs;
2. indication information of the first subband: for example, an identifier or an index of the first subband; or for another example, a bitmap, where a value of a bit corresponding to the first subband in the bitmap is 1; and
3. information indicating a CSI report type: during Implementation 1, the CSI report type is a periodic report.

Implementation 2: The network device configures, by using the first configuration information, the terminal device to semi-persistently report the first CSI of the first subband. The first configuration information may include CSI configuration information and first activation information, and the first activation information is used to activate a semi-persistent CSI report.

Optionally, Implementation 2 may include steps A1 and A2.

A1: The network device sends the CSI configuration information to the terminal device.

For specific content of the CSI configuration information, refer to Implementation 1. Only a CSI report type is replaced with the semi-persistent report.

A2: The network device sends the first activation information to the terminal device.

When the first CSI is carried on a PUCCH, the first activation information may be a MAC CE. When the first CSI is carried on a PUSCH, the first activation information may be DCI, and the DCI may be used to schedule the PUSCH that is used to carry the first CSI.

Implementation 3: The network device configures, by using the first configuration information, the terminal device to aperiodically report the first CSI of the first subband. The first configuration information may include CSI configuration information and second activation information, and the second activation information may be used to activate an aperiodic CSI report.

Optionally, Implementation 3 may include steps B1 and B2.

B1: The network device sends the CSI configuration information to the terminal device.

For specific content of the CSI configuration information, refer to Implementation 1. Only a CSI report type is replaced with the aperiodic report.

B2: The network device sends the second activation information to the terminal device.

The second activation information is DCI, and the DCI may schedule a PUSCH used to carry the first CSI.

S602: The network device sends second configuration information to the terminal device, and correspondingly, the terminal device receives the second configuration information from the network device.

The second configuration information may be used to configure a first resource set. The first resource set may be the first CSI-RS resource set or the second CSI-RS resource set described above. Any resource in the first resource set is a resource configured for the terminal device for channel measurement, and each resource in the first resource set may be indicated by a resource identifier (identifier, ID) or an index. Resources corresponding to a same identifier or a same index may be periodic resources, semi-persistent resources, or aperiodic resources. When resources corresponding to a same identifier or a same index are periodic resources or semi-persistent resources, the resources corresponding to the same identifier or the same index may include resources in a plurality of time units. For example, as shown in FIG. 4A, the first resource set includes two resources: a CSI-RS resource 1 (ID=1) and a CSI-RS resource 2 (ID=2). The CSI-RS resource 1 is a periodic resource, and includes CSI-RS resources corresponding to the identifier in a slot 0, a slot 5, and a slot 10. Optionally, when the first resource set further includes an aperiodic resource, for example, a CSI-RS resource 3 (ID=3), the CSI-RS resource 3 includes only a CSI-RS resource corresponding to the identifier in one slot.

The following separately describes a relationship between a resource in the first resource set and a first resource in Manner 1 and Manner 2. The first resource may include a resource used for uplink transmission, and a resource corresponding to a guard band between the resource used for uplink transmission and a resource used for downlink transmission.

Manner 1: An overlapping part between one or more resources in the first resource set and the first resource includes the first subband. When the one or more resources are periodic resources or semi-persistent resources, an overlapping part between a resource on at least one occasion (occasion) in the one or more resources and the first resource includes the first subband. For example (referred to as Example 1 below), as shown in FIG. 4A, an overlapping part between the CSI-RS resource 1 (ID=1) in the first resource set and the first resource includes a subband B and a subband C. If the first subband is the subband B or the subband C, the overlapping part between the one or more resources in the first resource set and the first resource includes the first subband, and the one or more resources are the CSI-RS resource 1.

Optionally, an overlapping part between a resource in a first time window in the one or more resources and the first resource includes the first subband. In other words, the overlapping part is the overlapping part between the resource in the first time window in the one or more resources and the first resource. A length of the first time window may be absolute time. For example, the length of the first time window is 10 time units or 10 milliseconds. Alternatively, the length of the first time window may be an integer multiple of a periodicity of a resource in the first resource set (for example, five periodicities). Alternatively, the length of the first time window is indicated by the network device. In addition, the first time window may be located before a CSI reference resource, that is, an end location of the first time window is located before the CSI reference resource. For example, the end location is a first time unit before the CSI reference resource. Alternatively, the end location of the first time window is a time unit in which the CSI reference resource is located.

For example, the first time window includes a slot 4 to a slot 12. As shown in FIG. 4A, if the overlapping part between the CSI-RS resource 1 in the first resource set and the first resource is located in the slot 10, and the overlapping part includes the subband B used as the first subband, the terminal device may determine that the overlapping part between the resource in the first time window in the one or more resources and the first resource includes the first subband. As shown in FIG. 4B, the overlapping part between the CSI-RS resource 1 in the first resource set and the first resource is located in the slot 0, and the terminal device may determine that the resource in the first time window in the one or more resources does not overlap the first resource.

Manner 2: The one or more resources in the first resource set do not include the first subband, and the at least one resource in the first resource set includes the first subband. In other words, a first part of resources in the first resource set include the first subband, and a second part of resources in the first resource set do not include the first subband. The first resource includes the first subband, and the at least one resource does not overlap the first resource, or the at least one resource overlaps the first resource, but the at least one resource does not overlap the first resource on the first subband. For example, as shown in FIG. 5, the CSI-RS resource 1 in the first resource set includes a subband A and a subband D, the CSI-RS resource 2 in the first resource set includes the subband A to the subband D, the first resource includes the subband B and the subband C, and the first subband is the subband B or the subband C.

Optionally, the resource in the first time window in the one or more resources does not include the first subband. For specific content of the first time window, refer to the descriptions of the first time window in Manner 1. For example, the first time window includes a slot 4 to a slot 12. As shown in FIG. 5, if the CSI-RS resource 1 in the first resource set does not include the subband B used as the first subband in the slot 4 to the slot 12, the terminal device may determine that the resource in the first time window in the one or more resources does not include the first subband.

In this application, the first configuration information and the second configuration information may be carried in a same message, or may be carried in different messages.

S603: The terminal device determines the first CSI of the first subband.

The first CSI may be first CSI corresponding to the one or more resources, or may be first CSI corresponding to a resource other than the one or more resources in the first resource set. Descriptions are separately provided below.

### I. For the first CSI corresponding to the one or more resources

The first CSI corresponding to the one or more resources is separately described below by using Implementation 1 and Implementation 2. Implementation 1 may be applicable to Manner 1 and Manner 2 described above, and Implementation 2 may be applicable to Manner 1.

Implementation 1: Regardless of whether the network device configures a time domain restriction for the terminal device, a value of the first CSI corresponding to the one or more resources is a preset value. In other words, the terminal device may fill an information bit of the first CSI corresponding to the one or more resources with the preset value. For example, on the basis of the foregoing Example 1, a value of first CSI corresponding to the CSI-RS resource 1 is the preset value. The preset value is, for example, 0 or 1. After receiving the first CSI whose value is the preset value, the network device may ignore the first CSI.

Optionally, a value of first information in the first CSI corresponding to the one or more resources is the preset value. In other words, the terminal device may fill an information bit of the first information in the first CSI corresponding to the one or more resources with the preset value, for example, with all 0s or all 1s. The first information may include information in a first part of the CSI and/or information in a second part of the CSI.

For example, the first information may include but is not limited to at least one of the follows.
1. CQI of a first codeword on the first subband: The CQI of the first codeword on the first subband may be subband differential CQI or subband CQI. A quantity of bits of the CQI of the first codeword on the first subband may be 2 or 4.
2. CQI of a second codeword on the first subband: The CQI of the second codeword on the first subband may be subband differential CQI or subband CQI. A quantity of bits of the CQI of the second codeword on the first subband may be 2 or 4.
3. PMI on the first subband: The PMI on the first subband is a subband PMI. A quantity of bits of the PMI on the first subband is not fixed, and may be 1, 2, or another value. A specific value of the quantity of bits of the PMI on the first subband may be determined based on a rank.

Optionally, the first CSI corresponding to the one or more resources does not include second information. In other words, the terminal device does not report the second information. The second information may include the information in the second part of the CSI.

For example, the second information may include but is not limited to at least one of the follows.
1. CQI of the second codeword on the first subband: For specific content, refer to the descriptions of the CQI of the second codeword on the first subband in the first information. After receiving the first part of the CSI, the network device may determine, by using a CRI in the first part of the CSI, that a CSI-RS resource corresponding to the first CSI is the CSI-RS resource 1, to determine that the terminal device does not need to report CQI of a second codeword on a subband at the overlapping part.
2. PMI on the first subband: For specific content, refer to the descriptions of the PMI on the first subband in the first information. Optionally, the second information may include a parameter i2 in the PMI on the first subband.

According to the method, a quantity of bits of the CSI reported by the terminal device can be decreased, to reduce overheads and save transmission resources.

Implementation 2: The terminal device may determine the first CSI of the first subband based on whether the network device configures a time domain restriction for the terminal device.

When the network device configures the time domain restriction for the terminal device, a value of the first CSI corresponding to the one or more resources is a preset value. For specific content, refer to Implementation 1. Details are not described herein again.

When the network device does not configure the time domain restriction for the terminal device, the value of the first CSI corresponding to the one or more resources is obtained through channel measurement. For example, as shown in FIG. 4A, when the terminal device obtains the CSI based on the CSI-RS resource 1, CSI on the subband B and the subband C may be obtained by processing CSI-RSs in the slot 0 and the slot 5, and CSI-RSs on the subband B and the subband C in the slot 10 are not used to obtain the CSI, for example, are not involved in filtering. In this case, if the first subband is the subband B or the subband C, CSI of the first subband is a value obtained through actual measurement.

### II. For the first CSI corresponding to the resource other than the one or more resources in the first resource set

A value of the first CSI corresponding to the resource other than the one or more resources in the first resource set is obtained through channel measurement. For example, as shown in FIG. 4A, the CSI-RS resource 2 does not overlap the first resource. If the first subband is the subband B, a value of CSI on the subband B corresponding to the CSI-RS resource 2 is obtained by performing channel measurement based on a CSI-RS. For another example, as shown in FIG. 5, the CSI-RS resource 2 does not overlap the first resource. If the first subband is the subband B, a value of CSI on the subband B corresponding to the CSI-RS resource 1 is a preset value, and a value of CSI on the subband B corresponding to the CSI-RS resource 2 is obtained by performing channel measurement based on a CSI-RS.

According to the method shown in FIG. 6, both the network device and the terminal device may determine the first CSI based on the first subband, to determine a bit quantity of the first CSI, so that the network device does not perform blind detection. This decreases complexity of CSI detection by the network device. For example, when the CSI is reported through the PUCCH, the network device may determine the bit quantity of the first CSI based on the first subband, and further determine a resource of the PUCCH, so that the network device does not perform blind detection. This decreases complexity of CSI detection by the network device. When the CSI is reported through the PUSCH, the network device may determine the bit quantity of the first CSI based on the first subband, so that the network device does not perform blind detection. This decreases complexity of CSI detection by the network device.

In some possible manners, based on Manner 1 described above, the method shown in FIG. 6 may further include S604 and/or S605.

S604: The terminal device determines not to receive, on the first subband of the one or more resources, a CSI-RS used for channel measurement. In other words, the terminal device determines that channel measurement on the first subband of the one or more resources may be ignored, or the terminal device determines not to perform channel measurement on the first subband of the one or more resources.

For example, as shown in FIG. 4A, if the one or more resources are the CSI-RS resource 1, and the first subband is the subband B, the terminal device may determine not to receive the CSI-RS on the subband B of the CSI-RS resource 1.

According to the method, the terminal device may not receive the CSI-RS at the overlapping part between the one or more resources and the first resource. This can reduce energy consumption of the terminal device, and increase standby time of the terminal device.

S605: The network device determines not to send, on the first subband of the one or more resources, the CSI-RS used for channel measurement.

For example, as shown in FIG. 4A, if the one or more resources are the CSI-RS resource 1, and the first subband is the subband B, the terminal device may determine not to send the CSI-RS on the subband B of the CSI-RS resource 1.

According to the method, the network device may not send the CSI-RS at the overlapping part between the one or more resources and the first resource. This can reduce energy consumption of the network device, reduce signaling overheads, avoid unnecessary resource occupation, and improve resource utilization.

In some possible manners, the network device may configure the terminal device to report CSI of a plurality of subbands. The following uses an example in which the plurality of subbands include the first subband and a second subband for description.

In S601, the first configuration information is further used to configure the terminal device to report second CSI of the second subband. For specific content of the first configuration information, refer to S601. Only the first subband is replaced with the second subband.

In S602, the overlapping part between the one or more resources that is in the first resource set and that is configured by using the first configuration information and the first resource does not include the second subband. For example, as shown in FIG. 4A, an overlapping part between the CSI-RS resource 1 in the first resource set and the first resource includes the subband B and the subband C. If the second subband is the subband A or the subband D, the overlapping part between the one or more resources in the first resource set and the first resource does not include the second subband, and the one or more resources are the CSI-RS resource 1.

The method shown in FIG. 6 further includes the following steps.

S606: The terminal device determines the second CSI.

The second CSI may be second CSI corresponding to the one or more resources, or may be second CSI corresponding to the resource other than the one or more resources in the first resource set. Descriptions are separately provided below.

### I. For the second CSI corresponding to the one or more resources

A value of the second CSI corresponding to the one or more resources is obtained through channel measurement. For example, as shown in FIG. 4A or FIG. 5, the terminal device obtains the CSI based on the CSI-RS resource 1, the second subband is the subband A or the subband D, and CSI on the subband A and the subband D may be obtained by processing CSI-RSs in the slot 0, the slot 5, and the slot 10. The processing is, for example, filtering.

### II. For the second CSI corresponding to the resource other than the one or more resources in the first resource set

A value of the second CSI corresponding to the resource other than the one or more resources in the first resource set is obtained through channel measurement. For example, as shown in FIG. 4A or FIG. 5, the terminal device obtains the CSI based on the CSI-RS resource 2, the second subband is the subband A or the subband D, and the CSI on the subband A and the subband D may be obtained by processing CSI-RSs in the slot 1, the slot 6, and the slot 11. The processing is, for example, filtering.

Optionally, a priority of the first CSI is lower than a priority of the second CSI. In other words, a priority of CSI on a subband that overlaps the first resource is lower than a priority of CSI on a subband that does not overlap the first resource. In this way, if a capacity of the PUSCH used to carry the CSI is insufficient, it may be considered that the CSI on the subband that overlaps the first resource is discarded first, for example, it is considered that information about a second part of the CSI on the subband that overlaps the first resource is discarded first. Then, it may be considered that the CSI on the subband that does not overlap the first resource is discarded, for example, then, it is considered that information about a second part of the CSI on the subband that does not overlap the first resource is discarded.

If a capacity of the PUCCH used to carry the CSI is insufficient, it may be considered that the second part of the CSI is discarded first, and then the first part of the CSI is discarded. When the second part of the CSI is discarded, it may be considered that a second part of CSI corresponding to a first CSI report is discarded first, and then a second part of CSI corresponding to a second CSI report is discarded. When the first part of the CSI is discarded, it may be considered that a first part of the CSI corresponding to the first CSI report is discarded first, and then a first part of the CSI corresponding to the second CSI report is discarded. One or more resources that are in a CSI-RS resource set and that are associated with the first CSI report overlap the first resource. In other words, the CSI corresponding to the first CSI report includes the CSI on the subband that overlaps the first resource. A resource that is in the CSI-RS resource set and that is associated with the second CSI report does not overlap the first resource. In other words, the CSI corresponding to the second CSI report does not include the CSI on the subband that overlaps the first resource.

For example, as shown in FIG. 4A, the subband that overlaps the first resource includes the subband B and the subband C, the subband that does not overlap the first resource includes the subband A and the subband D, and priorities of the CSI on the subband B and the CSI on the subband C are lower than priorities of the CSI on the subband A and the CSI on the subband D. The following uses an example in which the first subband is the subband B and the second subband is the subband A for description. If the capacity of the PUSCH used to carry the CSI is insufficient, the terminal device may first consider discarding information about a second part of the CSI on the subband B, and then consider discarding information about a second part of the CSI on the subband A. Priorities of the subband B and the subband C may be determined based on a parity of a subband, and a priority of CSI corresponding to an even-numbered subband is higher than a priority of CSI corresponding to an odd-numbered subband. Priorities of the subband A and the subband D are determined based on a parity of a subband, and the priority of the CSI corresponding to the even-numbered subband is higher than the priority of the CSI corresponding to the odd-numbered subband. If the capacity of the PUCCH used to carry the CSI is insufficient, the terminal device may first consider discarding the information about the second part of the CSI on the subband B (for example, corresponding to a CSI report 1), then consider discarding the information about the second part of the CSI on the subband A (for example, corresponding to a CSI report 0), and finally consider discarding information about a first part of the CSI.

According to the method, the terminal device can preferentially ensure transmission of the CSI on the subband that does not overlap the first resource, so that the terminal device can send, to the network device as much as possible, the CSI obtained through measurement. In this way, the network device performs downlink scheduling based on the CSI obtained through measurement, to improve downlink transmission performance.

To reduce complexity of CSI detection by the network device, an embodiment of this application provides another communication method. The method may be applied to the communication system shown in FIG. 1. The following specifically describes a procedure of the method with reference to a flowchart shown in FIG. 7.

S701: A network device sends first configuration information to a terminal device, and correspondingly, the terminal device receives the first configuration information from the network device.

The first configuration information is used to configure the terminal device to report first CSI of a first subband and second CSI of a second subband.

For specific content of S701, refer to that of S601. Details are not described herein again.

S702: The network device sends second configuration information to the terminal device, and correspondingly, the terminal device receives the second configuration information from the network device.

The second configuration information is used to configure a first resource set. The first resource set may be the first CSI-RS resource set or the second CSI-RS resource set described above. Any resource in the first resource set is a resource configured for the terminal device for channel measurement, and each resource in the first resource set may be indicated by a resource identifier or an index.

An overlapping part between one or more resources in the first resource set and a first resource includes the first subband, and the overlapping part does not include the second subband. For specific content of the first resource, refer to the descriptions of the first resource in S602. Details are not described herein again.

Optionally, an overlapping part between a resource in a first time window in the one or more resources and the first resource includes the first subband, but does not include the second subband. In other words, the overlapping part is the overlapping part between the resource in the first time window in the one or more resources and the first resource. For specific content of the overlapping part and the first time window, refer to the descriptions in Manner 1. Details are not described herein again.

In some possible manners, the one or more resources are a part of resources in the first resource set. For an example of this manner, refer to FIG. 4A. For specific content, refer to Example 1 in S602. Details are not described herein again.

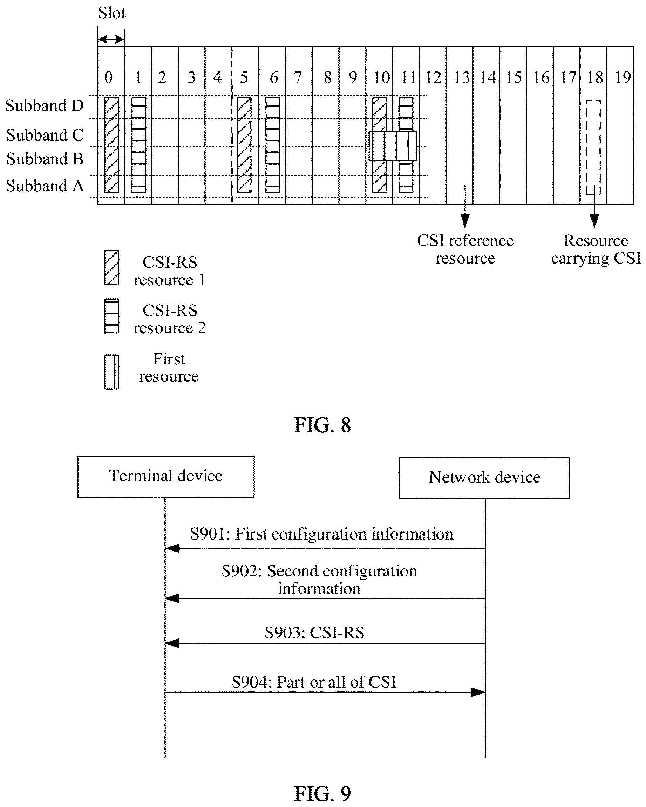

In some other possible manners, the one or more resources are all the resources in the first resource set. In other words, the overlapping part between each resource in the first resource set and the first resource includes the first subband. For example, as shown in FIG. 8, the first resource set includes a CSI-RS resource 1 and a CSI-RS resource 2. An overlapping part between the CSI-RS resource 1 and the first resource includes a subband B and a subband C, and an overlapping part between the CSI-RS resource 2 and the first resource also includes the subband B and the subband C. If the first subband is the subband B or the subband C, the overlapping part between each resource in the first resource set and the first resource includes the first subband, and the one or more resources are the CSI-RS resource 1 and the CSI-RS resource 2.

S703: The terminal device determines to send the second CSI to the network device, and not to send the first CSI to the network device. In other words, the terminal device determines to send only CSI on a subband other than the overlapping part to the network device.

For example, as shown in FIG. 4A or FIG. 8, the first subband is the subband B, and the second subband is a subband A. In this case, the terminal device determines to send CSI on the subband A to the network device and not to send CSI on the subband B to the network device.

Optionally, when the terminal device obtains the CSI by using a CSI-RS resource closest to a CSI reference resource, the terminal device may perform S703. In at least one of the following cases, the terminal device may determine to obtain the CSI by using the CSI-RS resource closest to the CSI reference resource: The network device configures a time domain restriction for the terminal device, and a CSI report type is an aperiodic report.

S704: The network device determines to receive the second CSI from the terminal device and not to receive the first CSI from the terminal device. In other words, the network device determines to receive only the CSI on the subband other than the overlapping part from the terminal device.

For example, as shown in FIG. 4A or FIG. 8, the first subband is the subband B, and the second subband is the subband A. In this case, the network device determines to receive the CSI on the subband A from the terminal device and not to receive the CSI on the subband B from the terminal device.

Optionally, when the terminal device obtains the CSI by using the CSI-RS resource closest to the CSI reference resource, the network device may perform S704. In at least one of the following cases, the network device may determine that the terminal device obtains the CSI by using the CSI-RS resource closest to the CSI reference resource: The network device configures the time domain restriction for the terminal device, and the CSI report type is the aperiodic report.

According to the method shown in FIG. 7, when the one or more resources in the first resource set overlap the first resource, the terminal device may send only the CSI on the subband other than the overlapping part to the network device. This can reduce overheads and save transmission resources.

In addition, when the CSI is reported through a PUCCH, the network device may determine a resource of the PUCCH based on the subband other than the overlapping part, so that the network device does not perform blind detection. This decreases complexity of CSI detection by the network device. When the CSI is reported through a PUSCH, the network device may determine a bit quantity of the first CSI based on the subband other than the overlapping part. This decreases complexity of CSI detection by the network device.

To reduce complexity of CSI detection by the network device, an embodiment of this application provides still another communication method. The method may be applied to the communication system shown in FIG. 1. The following specifically describes a procedure of the method with reference to a flowchart shown in FIG. 9.

S901: A network device sends first configuration information to a terminal device, and correspondingly, the terminal device receives the first configuration information from the network device.

The first configuration information is used to configure the terminal device to report CSI of a first subband.

For specific content of S901, refer to that of S601. Details are not described herein again.

S902: The network device sends second configuration information to the terminal device, and correspondingly, the terminal device receives the second configuration information from the network device.

The second configuration information indicates a first resource set. The first resource set may be the first CSI-RS resource set or the second CSI-RS resource set described above. Any resource in the first resource set is a resource configured for the terminal device for channel measurement, and each resource in the first resource set may be indicated by a resource identifier or an index.

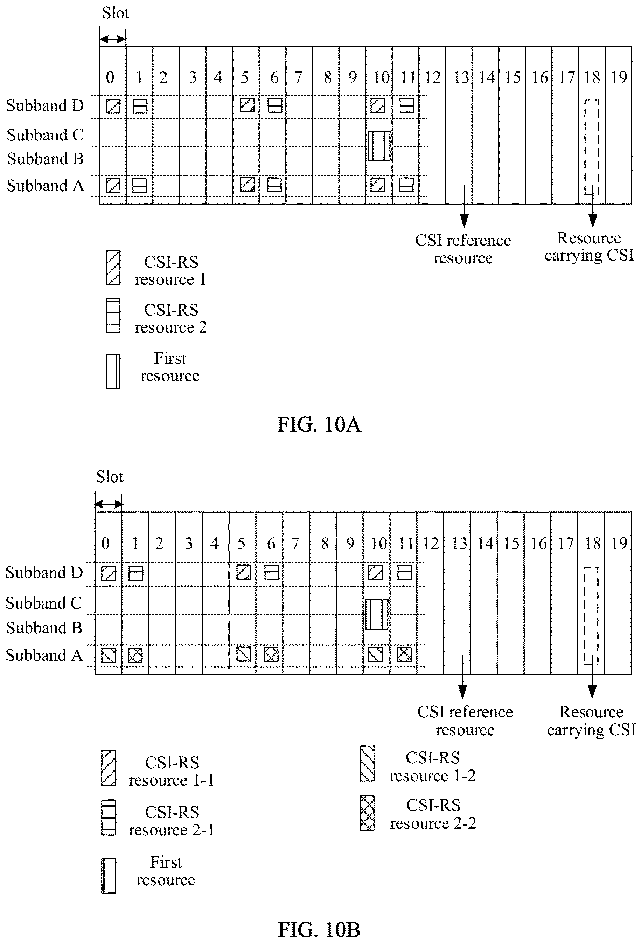

Each resource in the first resource set does not overlap a first resource in frequency domain. For specific content of the first resource, refer to the descriptions of the first resource in S602. Details are not described herein again. For example, as shown in FIG. 10A or FIG. 10B, each resource in the first resource set is located on a subband A and/or a subband D, and the first resource is located on a subband B and a subband C.

In some possible manners, bandwidths and/or frequency domain locations of resources in the first resource set are the same.

In an example, the resources in the first resource set are consecutive resources in frequency domain. A bandwidth of each resource in the first resource set is a first bandwidth, and a frequency domain start location of each resource is a first PRB. For example, the first resource set includes a CSI-RS resource 1 and a CSI-RS resource 2, a bandwidth of the CSI-RS resource 1 is the same as a bandwidth of the CSI-RS resource 2, and a frequency domain start location of the CSI-RS resource 1 is the same as a frequency domain start location of the CSI-RS resource 2.

In another example, each resource in the first resource set includes Q inconsecutive resources in frequency domain in one time unit, and a bandwidth and a frequency domain start location of an i^{th} resource in the Q inconsecutive resources in frequency domain are respectively a bandwidth and a location corresponding to i, where Q is a positive integer greater than or equal to 2, and i ranges from 1 to Q. In other words, bandwidths and frequency domain start locations of i^{th} resources, in one time unit, in resources in the first resource set are the same, and the i^{th} resource is one of the Q inconsecutive resources in frequency domain. For example, as shown in FIG. 10A, the first resource set includes the CSI-RS resource 1 and the CSI-RS resource 2. In one time unit (for example, a slot or a symbol), the CSI-RS resource 1 and the CSI-RS resource 2 each include two inconsecutive resources in frequency domain. A bandwidth and a frequency domain start location of a 1st resource in the CSI-RS resource 1 are respectively the same as a bandwidth and a frequency domain start location of a 1st resource in the CSI-RS resource 2. A bandwidth and a frequency domain start location of a 2nd resource in the CSI-RS resource 1 are respectively the same as a bandwidth and a frequency domain start location of a 2nd resource in the CSI-RS resource 2.

The Q inconsecutive resources in frequency domain are inconsecutive at a PRB granularity, that is, the Q resources are inconsecutive at a PRB granularity. For example, the CSI-RS resource 1 in the first resource set includes a PRB 0, a PRB 1, a PRB 2, ..., a PRB 23, a PRB 40, a PRB 41, ..., and a PRB 63 in a slot 0. In other words, the CSI-RS resource 1 includes two inconsecutive resources in frequency domain in the slot 0, the 1st resource in the slot 0 includes the PRB 0 to the PRB 23, and the 2nd resource in the slot 0 includes the PRB 41 to the PRB 63. For another example, the CSI-RS resource 1 in the first resource set includes a PRB 0, a PRB 2, a PRB 4, ..., a PRB 22, a PRB 40, a PRB 42, ..., a PRB 62, and the like in a slot 0. In other words, the CSI-RS resource 1 includes a plurality of inconsecutive PRBs in the slot 0. In this case, each PRB included in the CSI-RS resource 1 in the slot 0 is one of the Q inconsecutive resources in frequency domain.

In some other possible manners, the first resource set may include R second resource sets, any resource in each second resource set is a resource configured for the terminal device for channel measurement, and each resource in the second resource set may be indicated by a resource identifier or an index. Resources in each second resource set are consecutive resources in frequency domain, and bandwidths and/or frequency domain locations of the resources in each second resource set are the same. Resources in different second resource sets are inconsecutive in frequency domain. R is an integer greater than or equal to 2. For example, as shown in FIG. 10B, a second resource set 1 includes a CSI-RS resource 1-1 and a CSI-RS resource 2-1, and a bandwidth and a frequency domain start location of the CSI-RS resource 1-1 are respectively the same as a bandwidth and a frequency domain start location of the CSI-RS resource 2-1. A second resource set 2 includes a CSI-RS resource 1-2 and a CSI-RS resource 2-2, and a bandwidth and a frequency domain start location of the CSI-RS resource 1-2 are respectively the same as a bandwidth and a frequency domain start location of the CSI-RS resource 2-2. There is a spacing between a resource in the second resource set 1 and a resource in the second resource set 2 in frequency domain.

S903: The network device sends a CSI-RS used for channel measurement, and correspondingly, the terminal device receives, based on the first resource set, the CSI-RS used for channel measurement.

For example, as shown in FIG. 10A or FIG. 10B, each resource in the first resource set is located on the subband A and/or the subband D, and the first resource is located on the subband B and the subband C. If the first subband is the subband A, the network device may send the CSI-RS on the subband A, and the terminal device may receive the CSI-RS on the subband A based on the resource in the first resource set, and obtain the CSI based on the CSI-RS.

S904: The terminal device sends a part or all of the CSI to the network device, and correspondingly, the network device receives the part or all of the CSI from the terminal device.

The terminal device may send all the CSI to the network device. When resources used to carry the CSI are insufficient, for example, resources used to carry the CSI on a PUCCH or a PUSCH are insufficient, the terminal device may send the part of the CSI to the network device based on a priority of the CSI.

According to the method shown in FIG. 9, the network device may configure, for the terminal device, a resource that is used for channel measurement and that does not overlap the first resource. In this way, both the terminal device and the network device can determine a bit quantity of the CSI based on a non-overlapping subband, so that the network device does not perform blind detection. This decreases complexity of detecting CSI by the network device.

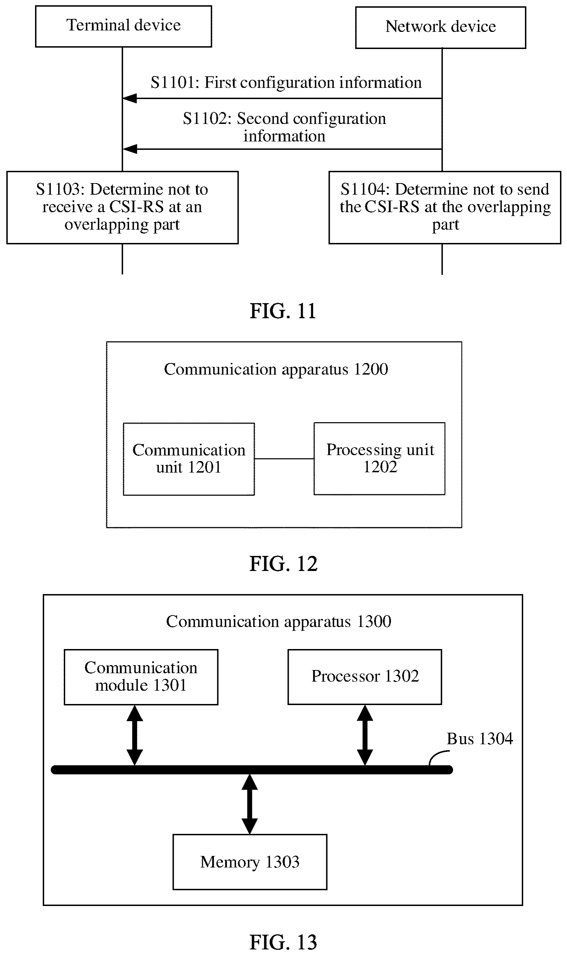

To reduce complexity of CSI detection by the network device, an embodiment of this application provides a communication method. The method may be applied to the communication system shown in FIG. 1. The following specifically describes a procedure of the method with reference to a flowchart shown in FIG. 11.

S1101: A network device sends first configuration information to a terminal device, and correspondingly, the terminal device receives the first configuration information from the network device.

The first configuration information is used to configure the terminal device to report CSI of a first subband.

For specific content of S1101, refer to that of S601. Details are not described herein again.

S1102: The network device sends second configuration information to the terminal device, and correspondingly, the terminal device receives the second configuration information from the network device.

For specific content of S1102, refer to that of S602. Repeated content is not described again.

The second configuration information indicates a first resource set. The first resource set may be the first CSI-RS resource set or the second CSI-RS resource set described above. Any resource in the first resource set is a resource configured for the terminal device for channel measurement, and each resource in the first resource set may be indicated by a resource identifier or an index.

An overlapping part between a second resource in the first resource set and a first resource includes the first subband. The second resource is, for example, a CSI-RS resource 1 in FIG. 4A. For specific content of the first resource, refer to the descriptions of the first resource in S602. Details are not described herein again.

S1103: The terminal device determines not to receive, at the overlapping part, a CSI-RS used for channel measurement.

In some possible manners, the terminal device determines not to receive the CSI-RS on the second resource at a first time domain location. The first time domain location is a time domain location at which the overlapping part is located. For example, the first time domain location is a CSI-RS occasion (occasion) or a slot in which the overlapping part is located. The first time domain location is before a CSI reference resource. The second resource is a periodic resource or an aperiodic resource. The periodic resource is, for example, a periodic CSI-RS resource or a semi-persistent CSI-RS resource, and the aperiodic resource is, for example, an aperiodic CSI-RS resource. For example, as shown in FIG. 4A, if the second resource is the CSI-RS resource 1, and the CSI-RS resource 1 overlaps the first resource in a slot 10, the terminal device determines not to receive the CSI-RS in the slot 10.

In an example, if the network device configures a time domain restriction for the terminal device, and the second resource at the first time domain location is a CSI-RS resource that is before the CSI reference resource and that is closest to the CSI reference resource, the terminal device may determine not to receive the CSI-RS on the second resource at the first time domain location, and receive the CSI-RS on the second resource at a second time domain location. The second time domain location is a time domain location that is before the first time domain location and at which a CSI-RS resource that is before the CSI reference resource, that is in the second resource, and that is closest to the CSI reference resource is located. In other words, the second time domain location is a time domain location at which the second resource that is before the CSI reference resource, that is closest to the CSI reference resource, and that does not overlap the first resource, or that has the overlapping part with the first resource not including the first subband is located. For example, as shown in FIG. 4A, the second resource is the CSI-RS resource 1, and the CSI-RS resource 1 overlaps the first resource in the slot 10. In this case, the terminal device may determine not to receive the CSI-RS in the slot 10, and receive the CSI-RS in a slot 5.

In another example, if the network device does not configure a time domain restriction for the terminal device, the terminal device may determine not to receive the CSI-RS on the second resource at the first time domain location, and receive the CSI-RS on a resource that is before the CSI reference resource and that is other than the second resource at the first time domain location in the second resource. For example, as shown in FIG. 4A, the second resource is the CSI-RS resource 1, and the CSI-RS resource 1 overlaps the first resource in a slot 10. In this case, the terminal device may determine not to receive the CSI-RS in the slot 10, and receive the CSI-RS in a slot 0 and a slot 5.

Optionally, in this manner, when the first resource set is an aperiodic CSI-RS resource set, a quantity of occupied CSI processing units (CSI processing units, CPUs) may be obtained by using one of the following examples. The CSI processing unit is a processing resource required for processing one CSI report (report). The processing resource includes, for example, a computing resource and a storage resource. In an example, the quantity of occupied CPUs may be a quantity of resources in the first resource set. For example, the first resource set includes two resources, and a quantity of occupied CPUs is 2. In this case, a quantity of bits of a CRI is 1. In another example, the quantity of occupied CPUs may be a quantity of resources minus a quantity of second resources in the first resource set. For example, if the first resource set includes two resources, and one of the two resources is the second resource, the quantity of occupied CPUs is 1. In this case, the quantity of bits of the CRI is 0.

In other possible manners, the second resource is a periodic resource. For example, the second resource is a periodic CSI-RS resource or a semi-persistent CSI-RS resource. The terminal device may determine not to receive the CSI-RS on the second resource. For example, as shown in FIG. 4A, if the second resource is the CSI-RS resource 1, and the CSI-RS resource 1 overlaps the first resource in the slot 10, the terminal device may determine not to receive the CSI-RS on the second resource.

S1104: The network device determines not to send, at the overlapping part, the CSI-RS used for channel measurement.

In some possible manners, the network device may determine not to send the CSI-RS on the second resource at the first time domain location. The first time domain location is a time domain location at which the overlapping part is located. For specific content of the first time domain location and the second resource, refer to that in S1103. Details are not described herein again.

In some other possible manners, the second resource is a periodic resource, and the network device may determine not to send the CSI-RS on the second resource. For example, as shown in FIG. 4A, the second resource is the CSI-RS resource 1, and the CSI-RS resource 1 overlaps the first resource in the slot 10. In this case, the network device may determine not to send the CSI-RS on the second resource.

Optionally, the method shown in FIG. 11 may include both S1103 and S1104, or may include only S1103 or S1104.

According to the method shown in FIG. 11, if the terminal device does not receive the CSI-RS at the overlapping part, energy consumption of the terminal device can be reduced, and standby time of the terminal device can be increased. If the network device does not send the CSI-RS at the overlapping part, energy consumption of the network device can be reduced, signaling overheads can be reduced, and transmission resources can be saved.

Based on a same technical concept as the method embodiments in FIG. 6 to FIG. 9, FIG. 10A, FIG. 10B, and FIG. 11, an embodiment of this application provides a communication apparatus in FIG. 12, which may be configured to perform functions in related steps in the foregoing method embodiments. The function may be implemented by hardware, or may be implemented by software or by hardware executing corresponding software. The hardware or the software includes one or more modules corresponding to the foregoing function. A structure of the communication apparatus is shown in FIG. 12, and includes a communication unit 1201 and a processing unit 1202. The communication apparatus 1200 may be used in the terminal device or the network device in the communication system shown in FIG. 1, and may implement the communication method provided in the foregoing embodiments and examples of this application. The following describes functions of the units in the communication apparatus 1200.

The communication unit 1201 is configured to receive and send data. The communication unit 1201 may be implemented by using a transceiver, for example, a mobile communication module. The mobile communication module may include at least one antenna, at least one filter, a switch, a power amplifier, a low noise amplifier (low noise amplifier, LNA), and the like.

The processing unit 1202 may be configured to support the communication apparatus 1200 in performing a processing action in the foregoing method embodiment. The processing unit 1202 may be implemented by using a processor. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

In a first implementation, the communication apparatus 1200 is used in the terminal device in the embodiment of this application shown in FIG. 6. The following describes a specific function of the processing unit 1202 in the implementation.

The processing unit 1202 is configured to: receive first configuration information from the network device through the communication unit 1201, where the first configuration information is used to configure the terminal device to report first CSI of a first subband; receive second configuration information from the network device through the communication unit 1201, where the second configuration information is used to configure a first resource set, any resource in the first resource set is a resource configured for the terminal device for channel measurement, an overlapping part between one or more resources in the first resource set and a first resource includes the first subband, and the first resource includes a resource used for uplink transmission and a resource corresponding to a guard band between the resource used for uplink transmission and a resource used for downlink transmission; and determine the first CSI, where a value of the first CSI corresponding to the one or more resources is a preset value.

Optionally, a value of first information in the first CSI corresponding to the one or more resources is the preset value. The first information includes at least one of the following: CQI of a first codeword on the first subband, CQI of a second codeword on the first subband, or a PMI on the first subband.

Optionally, the first CSI corresponding to the one or more resources does not include second information. The second information includes at least one of the following: the CQI of the second codeword on the first subband or the PMI on the first subband.

In some implementations, the processing unit 1202 is further configured to determine not to receive, on the first subband of the one or more resources, a CSI-RS used for channel measurement.

In some implementations, the first configuration information is further used to configure the terminal device to report second CSI of a second subband, and the overlapping part does not include the second subband. The processing unit 1202 is further configured to determine the second CSI, where a value of the second CSI corresponding to the one or more resources is obtained through channel measurement.

Optionally, a priority of the first CSI is lower than a priority of the second CSI.

Optionally, an overlapping part between a resource in a first time window in the one or more resources and the first resource includes the first subband.

In a second implementation, the communication apparatus 1200 is used in the network device in the embodiment of this application shown in FIG. 6. The following describes a specific function of the processing unit 1202 in the implementation.

The processing unit 1202 is configured to: send first configuration information to the terminal device through the communication unit 1201, where the first configuration information is used to configure the terminal device to report CSI of a first subband; and send second configuration information to the terminal device through the communication unit 1201, where the second configuration information is used to configure a first resource set, any resource in the first resource set is a resource configured for the terminal device for channel measurement, an overlapping part between one or more resources in the first resource set and a first resource includes the first subband, the first resource includes a resource used for uplink transmission and a resource corresponding to a guard band between the resource used for uplink transmission and a resource used for downlink transmission, and a value of the first CSI corresponding to the one or more resources is a preset value.

Optionally, a value of first information in the first CSI corresponding to the one or more resources is the preset value. The first information includes at least one of the following: CQI of a first codeword on the first subband, CQI of a second codeword on the first subband, or a PMI on the first subband.

Optionally, the first CSI corresponding to the one or more resources does not include second information. The second information includes at least one of the following: the CQI of the second codeword on the first subband or the PMI on the first subband.

In some implementations, the processing unit 1202 is further configured to determine not to send, on the first subband of the one or more resources, a CSI-RS used for channel measurement.

In some implementations, the first configuration information is further used to configure the terminal device to report second CSI of a second subband, and the overlapping part does not include the second subband. A value of the second CSI corresponding to the one or more resources is obtained through channel measurement.

Optionally, a priority of the first CSI is lower than a priority of the second CSI.

Optionally, an overlapping part between a resource in a first time window in the one or more resources and the first resource includes the first subband.

In a third implementation, the communication apparatus 1200 is used in the terminal device in the embodiment of this application shown in FIG. 7. The following describes a specific function of the processing unit 1202 in the implementation.

The processing unit 1202 is configured to: receive first configuration information from the network device through the communication unit 1201, where the first configuration information is used to configure the terminal device to report first CSI of a first subband and second CSI of a second subband; receive second configuration information from the network device through the communication unit 1201, where the second configuration information is used to configure a first resource set, any resource in the first resource set is a resource configured for the terminal device for channel measurement, an overlapping part between one or more resources in the first resource set and a first resource includes the first subband, the overlapping part does not include the second subband, and the first resource includes a resource used for uplink transmission and a resource corresponding to a guard band between the resource used for uplink transmission and a resource used for downlink transmission; and determine to send the second CSI to the network device, and not to send the first CSI to the network device.

In some implementations, an overlapping part between each resource in the first resource set and the first resource includes the first subband.

Optionally, an overlapping part between a resource in a first time window in the one or more resources and the first resource includes the first subband, and does not include the second subband.

In a fourth implementation, the communication apparatus 1200 is used in the network device in the embodiment of this application shown in FIG. 7. The following describes a specific function of the processing unit 1202 in the implementation.

The processing unit 1202 is configured to: send first configuration information to the terminal device through the communication unit 1201, where the first configuration information is used to configure the terminal device to report first CSI of a first subband and second CSI of a second subband; send second configuration information to the terminal device through the communication unit 1201, where the second configuration information is used to configure a first resource set, any resource in the first resource set is a resource configured for the terminal device for channel measurement, an overlapping part between one or more resources in the first resource set and a first resource includes the first subband, the overlapping part does not include the second subband, and the first resource includes a resource used for uplink transmission and a resource corresponding to a guard band between the resource used for uplink transmission and a resource used for downlink transmission; and determine to receive the second CSI from the terminal device, and not receive the first CSI from the terminal device.

In some implementations, an overlapping part between each resource in the first resource set and the first resource includes the first subband.

Optionally, an overlapping part between a resource in a first time window in the one or more resources and the first resource includes the first subband, and does not include the second subband.

In a fifth implementation, the communication apparatus 1200 is used in the terminal device in the embodiment of this application shown in FIG. 9. The following describes a specific function of the processing unit 1202 in the implementation.

The processing unit 1202 is configured to: receive first configuration information from the network device through the communication unit 1201, where the first configuration information is used to configure the terminal device to report CSI of a first subband; receive second configuration information from the network device through the communication unit 1201, where the second configuration information indicates a first resource set, any resource in the first resource set is a resource configured for the terminal device for channel measurement, each resource in the first resource set does not overlap a first resource in frequency domain, and the first resource includes a resource used for uplink transmission and a resource corresponding to a guard band between the resource used for uplink transmission and a resource used for downlink transmission; receive, through the communication unit 1201 based on the first resource set, a CSI-RS used for channel measurement; and send a part or all of the CSI to the network device through the communication unit 1201.

In some implementations, bandwidths and/or frequency domain locations of resources in the first resource set are the same.

Optionally, each resource in the first resource set includes Q inconsecutive resources in frequency domain in one time unit, and a bandwidth and a frequency domain start location of an i^{th} resource in the Q inconsecutive resources in frequency domain are respectively a bandwidth and a location corresponding to i, where Q is a positive integer greater than or equal to 2, and i ranges from 1 to Q.

In a sixth implementation, the communication apparatus 1200 is used in the network device in the embodiment of this application shown in FIG. 9. The following describes a specific function of the processing unit 1202 in the implementation.

The processing unit 1202 is configured to: send first configuration information to the terminal device through the communication unit 1201, where the first configuration information is used to configure the terminal device to report CSI of a first subband; send second configuration information to the terminal device through the communication unit 1201, where the second configuration information indicates a first resource set, any resource in the first resource set is a resource configured for the terminal device for channel measurement, each resource in the first resource set does not overlap a first resource in frequency domain, and the first resource includes a resource used for uplink transmission and a resource corresponding to a guard band between the resource used for uplink transmission and a resource used for downlink transmission; and receive a part or all of the CSI from the terminal device through the communication unit 1201.

In some implementations, bandwidths and/or frequency domain locations of resources in the first resource set are the same.

Optionally, each resource in the first resource set includes Q inconsecutive resources in frequency domain in one time unit, and a bandwidth and a frequency domain start location of an i^{th} resource in the Q inconsecutive resources in frequency domain are respectively a bandwidth and a location corresponding to i, where Q is a positive integer greater than or equal to 2, and i ranges from 1 to Q.

In a seventh implementation, the communication apparatus 1200 is used in the terminal device in the embodiment of this application shown in FIG. 11. The following describes a specific function of the processing unit 1202 in the implementation.

The processing unit 1202 is configured to: receive first configuration information from the network device through the communication unit 1201, where the first configuration information is used to configure the terminal device to report CSI of a first subband; receive second configuration information from the network device through the communication unit 1201, where the second configuration information indicates a first resource set, any resource in the first resource set is a resource configured for the terminal device for channel measurement, an overlapping part between a second resource in the first resource set and a first resource includes the first subband, and the first resource includes a resource used for uplink transmission and a resource corresponding to a guard band between the resource used for uplink transmission and a resource used for downlink transmission; and determine not to receive, at the overlapping part, a CSI-RS for channel measurement.

In some implementations, the processing unit 1202 is specifically configured to: determine not to receive the CSI-RS on the second resource at a first time domain location, where the first time domain location is a time domain location at which the overlapping part is located, and the second resource is a periodic resource or an aperiodic resource.

In some other implementations, the second resource is a periodic resource. The processing unit 1202 is specifically configured to determine not to receive the CSI-RS by using the second resource.

In an eighth implementation, the communication apparatus 1200 is used in the network device in the embodiment of this application shown in FIG. 11. The following describes a specific function of the processing unit 1202 in the implementation.

The processing unit 1202 is configured to: send first configuration information to the terminal device through the communication unit 1201, where the first configuration information is used to configure the terminal device to report CSI of a first subband; send second configuration information to the terminal device through the communication unit 1201, where the second configuration information indicates a first resource set, any resource in the first resource set is a resource configured for the terminal device for channel measurement, an overlapping part between a second resource in the first resource set and a first resource includes the first subband, and the first resource includes a resource used for uplink transmission and a resource corresponding to a guard band between the resource used for uplink transmission and a resource used for downlink transmission; and determine not to send, at the overlapping part, a CSI-RS for channel measurement.

In some implementations, the processing unit 1202 is specifically configured to: determine not to send the CSI-RS on the second resource at a first time domain location, where the first time domain location is a time domain location at which the overlapping part is located, and the second resource is a periodic resource or an aperiodic resource.

In some other implementations, the second resource is a periodic resource. The processing unit 1202 is specifically configured to determine not to send the CSI-RS by using the second resource.

It should be noted that, in the foregoing embodiment of this application, division into the modules is an example, is merely logical function division, and may be other division during actual implementation. In addition, functional units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for instructing a computer device (which may be a personal computer, a server, or a network device) or a processor to perform all or a part of the steps of the methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Based on a same technical concept, an embodiment of this application provides a communication apparatus shown in FIG. 13, which may be configured to perform related steps in the foregoing method embodiments. The communication apparatus may be used in the terminal device or the network device in the communication system shown in FIG. 1, may implement the communication method provided in the foregoing embodiments and examples of this application, and has a function of the communication apparatus shown in FIG. 12. Refer to FIG. 13. The communication apparatus 1300 includes a communication module 1301, a processor 1302, and a memory 1303. The communication module 1301, the processor 1302, and the memory 1303 are connected to each other.

Optionally, the communication module 1301, the processor 1302, and the memory 1303 are connected to each other through a bus 1304. The bus 1304 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line represents the bus in FIG. 13, but this does not mean that there is only one bus or only one type of bus.

The communication module 1301 is configured to receive and send data, to implement communication interaction with another device. For example, the communication module 1301 may be implemented by a physical interface, a communication module, a communication interface, or an input/output interface.

The processor 1302 may be configured to support the communication apparatus 1300 in performing a processing action in the foregoing method embodiments. When the communication apparatus 1300 is configured to implement the foregoing method embodiments, the processor 1302 may be further configured to implement a function of the foregoing processing unit 1202. The processor 1302 may be a CPU, or may be another general-purpose processor, a DSP, an ASIC, an FPGA or another programmable logic device, a transistor logic device, a hardware component, or any combination thereof. The general-purpose processor may be a microprocessor or any regular processor or the like.

In a first implementation, the communication apparatus 1300 is used in the terminal device in the embodiment of this application shown in FIG. 6. The processor 1302 is specifically configured to: receive first configuration information from the network device through the communication module 1301, where the first configuration information is used to configure the terminal device to report first CSI of a first subband; receive second configuration information from the network device through the communication module 1301, where the second configuration information is used to configure a first resource set, any resource in the first resource set is a resource configured for the terminal device for channel measurement, an overlapping part between one or more resources in the first resource set and a first resource includes the first subband, and the first resource includes a resource used for uplink transmission and a resource corresponding to a guard band between the resource used for uplink transmission and a resource used for downlink transmission; and determine the first CSI, where a value of the first CSI corresponding to the one or more resources is a preset value.

In a second implementation, the communication apparatus 1300 is used in the network device in the embodiment of this application shown in FIG. 6. The processor 1302 is specifically configured to: send first configuration information to the terminal device through the communication module 1301, where the first configuration information is used to configure the terminal device to report CSI of a first subband; and send second configuration information to the terminal device through the communication module 1301, where the second configuration information is used to configure a first resource set, any resource in the first resource set is a resource configured for the terminal device for channel measurement, an overlapping part between one or more resources in the first resource set and a first resource includes the first subband, the first resource includes a resource used for uplink transmission and a resource corresponding to a guard band between the resource used for uplink transmission and a resource used for downlink transmission, and a value of the first CSI corresponding to the one or more resources is a preset value.

In a third implementation, the communication apparatus 1300 is used in the terminal device in the embodiment of this application shown in FIG. 7. The processor 1302 is specifically configured to: receive first configuration information from the network device through the communication module 1301, where the first configuration information is used to configure the terminal device to report first CSI of a first subband and second CSI of a second subband; receive second configuration information from the network device through the communication module 1301, where the second configuration information is used to configure a first resource set, any resource in the first resource set is a resource configured for the terminal device for channel measurement, an overlapping part between one or more resources in the first resource set and a first resource includes the first subband, the overlapping part does not include the second subband, and the first resource includes a resource used for uplink transmission and a resource corresponding to a guard band between the resource used for uplink transmission and a resource used for downlink transmission; and determine to send the second CSI to the network device, and not to send the first CSI to the network device.

In a fourth implementation, the communication apparatus 1300 is used in the network device in the embodiment of this application shown in FIG. 7. The processor 1302 is specifically configured to: send first configuration information to the terminal device through the communication module 1301, where the first configuration information is used to configure the terminal device to report first CSI of a first subband and second CSI of a second subband; send second configuration information to the terminal device through the communication module 1301, where the second configuration information is used to configure a first resource set, any resource in the first resource set is a resource configured for the terminal device for channel measurement, an overlapping part between one or more resources in the first resource set and a first resource includes the first subband, the overlapping part does not include the second subband, and the first resource includes a resource used for uplink transmission and a resource corresponding to a guard band between the resource used for uplink transmission and a resource used for downlink transmission; and determine to receive the second CSI from the terminal device, and not receive the first CSI from the terminal device.

In a fifth implementation, the communication apparatus 1300 is used in the terminal device in the embodiment of this application shown in FIG. 9. The processor 1302 is specifically configured to: receive first configuration information from the network device through the communication module 1301, where the first configuration information is used to configure the terminal device to report CSI of a first subband; receive second configuration information from the network device through the communication module 1301, where the second configuration information indicates a first resource set, any resource in the first resource set is a resource configured for the terminal device for channel measurement, each resource in the first resource set does not overlap a first resource in frequency domain, and the first resource includes a resource used for uplink transmission and a resource corresponding to a guard band between the resource used for uplink transmission and a resource used for downlink transmission; receive, through the communication module 1301 based on the first resource set, a CSI-RS used for channel measurement; and send a part or all of the CSI to the network device through the communication module 1301.

In a sixth implementation, the communication apparatus 1300 is used in the network device in the embodiment of this application shown in FIG. 9. The processor 1302 is specifically configured to: send first configuration information to the terminal device through the communication module 1301, where the first configuration information is used to configure the terminal device to report CSI of a first subband; send second configuration information to the terminal device through the communication module 1301, where the second configuration information indicates a first resource set, any resource in the first resource set is a resource configured for the terminal device for channel measurement, each resource in the first resource set does not overlap a first resource in frequency domain, and the first resource includes a resource used for uplink transmission and a resource corresponding to a guard band between the resource used for uplink transmission and a resource used for downlink transmission; and receive a part or all of the CSI from the terminal device through the communication module 1301.

In a seventh implementation, the communication apparatus 1300 is used in the terminal device in the embodiment of this application shown in FIG. 11. The processor 1302 is specifically configured to: receive first configuration information from the network device through the communication module 1301, where the first configuration information is used to configure the terminal device to report CSI of a first subband; receive second configuration information from the network device through the communication module 1301, where the second configuration information indicates a first resource set, any resource in the first resource set is a resource configured for the terminal device for channel measurement, an overlapping part between a second resource in the first resource set and a first resource includes the first subband, and the first resource includes a resource used for uplink transmission and a resource corresponding to a guard band between the resource used for uplink transmission and a resource used for downlink transmission; and determine not to receive, at the overlapping part, a CSI-RS for channel measurement.

In an eighth implementation, the communication apparatus 1300 is used in the network device in the embodiment of this application shown in FIG. 11. The processor 1302 is specifically configured to: send first configuration information to the terminal device through the communication module 1301, where the first configuration information is used to configure the terminal device to report CSI of a first subband; send second configuration information to the terminal device through the communication module 1301, where the second configuration information indicates a first resource set, any resource in the first resource set is a resource configured for the terminal device for channel measurement, an overlapping part between a second resource in the first resource set and a first resource includes the first subband, and the first resource includes a resource used for uplink transmission and a resource corresponding to a guard band between the resource used for uplink transmission and a resource used for downlink transmission; and determine not to send, at the overlapping part, a CSI-RS for channel measurement.

For a specific function of the processor 1302, refer to the descriptions in the communication method provided in the foregoing embodiments and examples of this application, and the specific function descriptions of the communication apparatus 1200 in the embodiment of this application shown in FIG. 12. Details are not described herein again.

The memory 1303 is configured to store program instructions, data, and the like. Specifically, the program instructions may include program code, and the program code includes computer operation instructions. The memory 1303 may include a RAM, or may include a non-volatile memory (non-volatile memory), for example, at least one magnetic disk storage. The processor 1302 executes the program instructions stored in the memory 1303, and implements the foregoing functions by using the data stored in the memory 1303, to implement the communication method provided in the foregoing embodiments of this application.

It may be understood that the memory 1303 in FIG. 13 in this application may be a volatile memory or a non-volatile memory, or may include both a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and is used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the systems and methods described in this specification includes but is not limited to these and any memory of another appropriate type.

Based on the foregoing embodiments, an embodiment of this application further provides a computer program. When the computer program is run on a computer, the computer is enabled to perform the method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer.

Based on the foregoing embodiments, an embodiment of this application further provides a chip. The chip is configured to read a computer program stored in a memory, to implement the method provided in the foregoing embodiment.

Based on the foregoing embodiments, an embodiment of this application provides a chip system. The chip system includes a processor, configured to support a computer apparatus in implementing functions related to devices in the foregoing embodiments. In a possible design, the chip system further includes a memory, and the memory is configured to store a program and data that are necessary for the computer apparatus. The chip system may include a chip, or may include a chip and another discrete component.

In embodiments of this application, unless otherwise specified or a logic conflict occurs, terms and/or descriptions in different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, applied to a terminal device or a chip in the terminal device, comprising:
receiving first configuration information from a network device, wherein the first configuration information is used to configure the terminal device to report first channel state information CSI of a first subband;
receiving second configuration information from the network device, wherein the second configuration information is used to configure a first resource set, any resource in the first resource set is a resource configured for the terminal device for channel measurement, an overlapping part between one or more resources in the first resource set and a first resource comprises the first subband, and the first resource comprises a resource used for uplink transmission and a resource corresponding to a guard band between the resource used for uplink transmission and a resource used for downlink transmission; and
determining the first CSI, wherein a value of the first CSI corresponding to the one or more resources is a preset value.

2. The method according to claim 1, wherein a value of first information in the first CSI corresponding to the one or more resources is the preset value, and the first information comprises at least one of the following:
channel quality information CQI of a first codeword on the first subband, CQI of a second codeword on the first subband, or a precoding matrix indicator PMI on the first subband.

3. The method according to claim 1 or 2, wherein the first CSI corresponding to the one or more resources does not comprise second information, and the second information comprises at least one of the following:
the CQI of the second codeword on the first subband, and the PMI on the first subband.

4. The method according to any one of claims 1 to 3, further comprising:
determining not to receive, on the first subband of the one or more resources, a channel state information-reference signal CSI-RS used for channel measurement.

5. The method according to any one of claims 1 to 4, wherein the first configuration information is further used to configure the terminal device to report second CSI of a second subband, the overlapping part does not comprise the second subband, and the method further comprises:
determining the second CSI, wherein a value of the second CSI corresponding to the one or more resources is obtained through channel measurement.

6. The method according to claim 5, wherein a priority of the first CSI is lower than a priority of the second CSI.

7. The method according to any one of claims 1 to 6, wherein an overlapping part between a resource in a first time window in the one or more resources and the first resource comprises the first subband.

8. A communication method, applied to a network device or a chip in the network device, comprising:
sending first configuration information to a terminal device, wherein the first configuration information is used to configure the terminal device to report channel state information CSI of a first subband; and
sending second configuration information to the terminal device, wherein the second configuration information is used to configure a first resource set, any resource in the first resource set is a resource configured for the terminal device for channel measurement, an overlapping part between one or more resources in the first resource set and a first resource comprises the first subband, the first resource comprises a resource used for uplink transmission and a resource corresponding to a guard band between the resource used for uplink transmission and a resource used for downlink transmission, and a value of the first CSI corresponding to the one or more resources is a preset value.

9. The method according to claim 8, wherein a value of first information in the first CSI corresponding to the one or more resources is the preset value, and the first information comprises at least one of the following:
channel quality information CQI of a first codeword on the first subband, CQI of a second codeword on the first subband, or a precoding matrix indicator PMI on the first subband.

10. The method according to claim 8 or 9, wherein the first CSI corresponding to the one or more resources does not comprise second information, and the second information comprises at least one of the following:
the CQI of the second codeword on the first subband, and the PMI on the first subband.

11. The method according to any one of claims 8 to 10, further comprising:
determining not to send, on the first subband of the one or more resources, a channel state information-reference signal CSI-RS used for channel measurement.

12. The method according to any one of claims 8 to 11, wherein the first configuration information is further used to configure the terminal device to report second CSI of a second subband, the overlapping part does not comprise the second subband, and a value of the second CSI corresponding to the one or more resources is obtained through channel measurement.

13. The method according to claim 12, wherein a priority of the first CSI is lower than a priority of the second CSI.

14. The method according to any one of claims 8 to 13, wherein an overlapping part between a resource in a first time window in the one or more resources and the first resource comprises the first subband.

15. A communication method, applied to a terminal device or a chip in the terminal device, comprising:
receiving first configuration information from a network device, wherein the first configuration information is used to configure the terminal device to report channel state information CSI of a first subband;
receiving second configuration information from the network device, wherein the second configuration information indicates a first resource set, any resource in the first resource set is a resource configured for the terminal device for channel measurement, each resource in the first resource set does not overlap a first resource in frequency domain, and the first resource comprises a resource used for uplink transmission and a resource corresponding to a guard band between the resource used for uplink transmission and a resource used for downlink transmission;
receiving, based on the first resource set, a channel state information-reference signal CSI-RS used for channel measurement; and
sending a part or all of the CSI to the network device.

16. The method according to claim 15, wherein bandwidths and/or frequency domain locations of resources in the first resource set are the same.

17. The method according to claim 16, wherein each resource in the first resource set comprises Q inconsecutive resources in frequency domain in one time unit, and a bandwidth and a frequency domain start location of an i^{th} resource in the Q inconsecutive resources in frequency domain are respectively a bandwidth and a location corresponding to i, wherein Q is a positive integer greater than or equal to 2, and i ranges from 1 to Q.

18. A communication method, applied to a network device or a chip in the network device, comprising:
sending first configuration information to a terminal device, wherein the first configuration information is used to configure the terminal device to report channel state information CSI of a first subband;
sending second configuration information to the terminal device, wherein the second configuration information indicates a first resource set, any resource in the first resource set is a resource configured for the terminal device for channel measurement, each resource in the first resource set does not overlap a first resource in frequency domain, and the first resource comprises a resource used for uplink transmission and a resource corresponding to a guard band between the resource used for uplink transmission and a resource used for downlink transmission; and
receiving a part or all of the CSI from the terminal device.

19. The method according to claim 18, wherein bandwidths and/or frequency domain locations of resources in the first resource set are the same.

20. The method according to claim 19, wherein each resource in the first resource set comprises Q inconsecutive resources in frequency domain in one time unit, and a bandwidth and a frequency domain start location of an i^{th} resource in the Q inconsecutive resources in frequency domain are respectively a bandwidth and a location corresponding to i, wherein Q is a positive integer greater than or equal to 2, and i ranges from 1 to Q.

21. A communication method, applied to a terminal device or a chip in the terminal device, comprising:
receiving first configuration information from a network device, wherein the first configuration information is used to configure the terminal device to report channel state information CSI of a first subband;
receiving second configuration information from the network device, wherein the second configuration information indicates a first resource set, any resource in the first resource set is a resource configured for the terminal device for channel measurement, an overlapping part between a second resource in the first resource set and a first resource comprises the first subband, and the first resource comprises a resource used for uplink transmission and a resource corresponding to a guard band between the resource used for uplink transmission and a resource used for downlink transmission; and
determining not to receive, at the overlapping part, a channel state information-reference signal CSI-RS used for channel measurement.

22. The method according to claim 21, wherein the determining not to receive, at the overlapping part, the CSI-RS used for channel measurement comprises:
determining not to receive the CSI-RS on the second resource at a first time domain location, wherein the first time domain location is a time domain location at which the overlapping part is located, and the second resource is a periodic resource or an aperiodic resource.

23. The method according to claim 21, wherein the second resource is a periodic resource; and
the determining not to receive, at the overlapping part, the CSI-RS used for channel measurement comprises:
determining not to receive the CSI-RS by using the second resource.

24. A communication method, applied to a network device or a chip in the network device, comprising:
sending first configuration information to a terminal device, wherein the first configuration information is used to configure the terminal device to report channel state information CSI of a first subband;
sending second configuration information to the terminal device, wherein the second configuration information indicates a first resource set, any resource in the first resource set is a resource configured for the terminal device for channel measurement, an overlapping part between a second resource in the first resource set and a first resource comprises the first subband, and the first resource comprises a resource used for uplink transmission and a resource corresponding to a guard band between the resource used for uplink transmission and a resource used for downlink transmission; and
determining not to send, at the overlapping part, a channel state information-reference signal CSI-RS used for channel measurement.

25. The method according to claim 24, wherein the determining not to send, at the overlapping part, the channel state information-reference signal CSI-RS used for channel measurement comprises:
determining not to send the CSI-RS on the second resource at the first time domain location, wherein the first time domain location is a time domain location at which the overlapping part is located, and the second resource is a periodic resource or an aperiodic resource.

26. The method according to claim 24, wherein the second resource is a periodic resource; and
the determining not to send, at the overlapping part, the channel state information-reference signal CSI-RS used for channel measurement comprises:
determining not to send the CSI-RS by using the second resource.

27. A communication apparatus, comprising:
a communication unit, configured to receive and send data; and
a processing unit, configured to perform the method according to any one of claims 1 to 26 through the communication unit.

28. A computer-readable storage medium, wherein the computer-readable storage medium stores a computer program, and when the computer program is run on a computer, the computer is enabled to perform the method according to any one of claims 1 to 26.

29. A chip, wherein the chip is coupled to a memory, and the chip reads a computer program stored in the memory, to perform the method according to any one of claims 1 to 26.
